# FASCICULE DE BREVET EUROPEEN

(11) **EP 2 340 430 B1**
(45) Date de publication et mention de la délivrance du brevet: **25.11.2015**
(21) Numéro de dépôt: 09783510.2
(22) Date de dépôt: 28.09.2009
(51) Int. Cl.: G01N 27/12, B82Y 30/00, B82Y 15/00

(54) **CAPTEURS CHIMIQUES À BASE DE NANOTUBES DE CARBONE, PROCÉDÉ DE PRÉPARATION ET UTILISATIONS**
CHEMISCHE SENSOREN MIT KOHLENSTOFF-NANORÖHRCHEN, VERFAHREN ZUR HERSTELLUNG DAVON SOWIE VERWENDUNGEN DAFÜR
CHEMICAL SENSORS CONTAINING CARBON NANOTUBES, METHOD FOR MAKING SAME, AND USES THEREOF

(30) Priorité: 29.09.2008 FR 0856519
(43) Date de publication de la demande: 06.07.2011
(73) Titulaire: COMMISSARIAT A L'ENERGIE ATOMIQUE ET AUX ENERGIES ALTERNATIVES, 75015 Paris (FR)
(72) Inventeur: MAYNE-L'HERMITE, Martine, F-91470 Les Molieres (FR); PALACIN, Serge, F-78180 Montigny-le-Bretonneux (FR); CHENEVIER, Pascale, F-91140 Villebon sur Yvette (FR); CHANCOLON, Jérôme, F-45430 MARDIE (FR); GOHIER, Aurélien, F-92160 Antony (FR)
(74) Mandataire: Ilgart, Jean-Christophe
(86) Numéro de dépôt international: PCT/EP2009/062562
(87) Numéro de publication internationale: WO 2010/034840

(56) Documents cités:
- EP-A- 1 884 770
- WO-A-2005/031299
- US-A1- 2002 117 659
- US-B1- 7 318 908
- BAHR J L ET AL: "Highly functionalized carbon nanotubes using in situ generated diazonium compounds" CHEMISTRY OF MATERIALS, AMERICAN CHEMICAL SOCIETY, WASHINGTON, US, vol. 13, 24 octobre 2001 (2001-10-24), pages 3823-3824, XP002350421 ISSN: 0897-4756
- PENGFEI QI ET AL: "Toward large arrays of multiplex functionalized carbon nanotube sensors for highly sensitive and selective molecular detection" NANO LETTERS, ACS, WASHINGTON, DC, US, vol. 3, no. 3, 1 mars 2003 (2003-03-01), pages 347-351, XP002332684 ISSN: 1530-6984 cité dans la demande

## Description

### DOMAINE TECHNIQUE

La présente invention concerne le domaine de la détection, l'identification et la quantification d'espèces chimiques gazeuses et notamment d'espèces chimiques gazeuses toxiques.

La présente invention concerne, plus particulièrement, un dispositif de type capteur chimique comprenant des nanotubes de carbone multi-feuillets recuits et fonctionnalisés, et permettant une telle détection, identification et quantification, son procédé de préparation et ses utilisations. La fonctionnalisation se présente sous forme d'une fine couche de polymère ou bien de quelques groupements chimiques en surface des nanotubes de carbone.

### ÉTAT DE LA TECHNIQUE ANTÉRIEURE

La détection dans l'atmosphère de substances chimiques toxiques constitue un gage important de notre sécurité que ce soit dans la vie civile ou professionnelle. Des valeurs d'expositions moyennes limites sont, par ailleurs, déjà établies pour un grand nombre d'agents chimiques. Dans ce contexte, le développement de capteurs chimiques performants, i.e. qui transforment de l'information chimique en un signal analytique utile, constitue donc un impératif.

Cependant, de fortes contraintes encadrent la fabrication de tels capteurs chimiques, ces derniers devant être, à la fois, sensibles et sélectifs.

En effet, le capteur doit être très sensible à l'agent chimique ciblé, i.e. être capable de délivrer une réponse pour des teneurs inférieures aux teneurs limites (ppm ou ppb selon les gaz).

Le capteur doit également être sélectif, i.e. il doit faire la différence entre plusieurs agents chimiques.

A ces contraintes fondamentales, d'autres points, plus secondaires, peuvent s'ajouter au cahier des charges.

Ainsi, il est préférable que
- le capteur possède un faible encombrement, autrement dit qu'il puisse être miniaturisable, afin de réaliser des analyses directement dans le milieu à analyser au lieu de procéder par prélèvement ;
- le capteur soit simple à fabriquer afin de présenter un coût de production le plus réduit possible ;
- le capteur soit, en fonctionnement, peu consommateur en énergie et ce pour une portabilité accrue ;
- que le capteur puisse être utilisé plusieurs fois (principe de réversibilité du capteur).

De nombreux gaz toxiques sont ciblés par des dispositifs de type capteur : les composés organiques volatils, l'ammoniac, l'oxyde d'azote, les composés chlorés, le diméthyl méthylphosphonate (DMMP), l'hydrogène, le méthane.... L'état de l'art sur les capteurs d'agents chimiques présenté ci-après concerne, plus particulièrement, les dispositifs permettant la détection du chlore gazeux et les capteurs à base de nanotubes de carbone.

La valeur de concentration de chlore pouvant entraîner un danger immédiat pour la vie et la santé est d'environ 10 ppm. L'exposition moyenne pondérée limite du chlore (8 h d'exposition par jour travaillé) a été évaluée à 500 ppb par certains organismes publics comme la Commission de la Santé et de la Sécurité du Travail (organisme canadien). C'est pourquoi il est nécessaire d'assurer la détection de ce gaz à des concentrations de l'ordre de la centaine de ppb, voire en dessous.

D'une manière générale, les capteurs d'agents chimiques sont composés de deux éléments principaux : un système de reconnaissance et un transducteur de signal. Ils sont classés selon leur mode de transduction : électrique, calorimétrique, électrochimique, optique, massique ou magnétique et touchent quatre types de marchés différents que sont la santé, l'environnement, l'industrie et la défense.

Différents capteurs sensibles au chlore existent déjà : on peut citer les capteurs potentiométriques, les capteurs à ionisation, les capteurs opto-chimiques et les capteurs résistifs à partir de matériaux semi-conducteurs.

Les capteurs potentiométriques reposent sur la confection d'un électrolyte solide, par exemple SrCl₂-KCl, PbCl₂-KCl ou BaCl₂KCl. Le principe de fonctionnement de ces capteurs repose sur la mesure d'un potentiel, qui varie en fonction de la teneur en chlore. Typiquement, les réponses de ces capteurs sont étudiées pour des gammes de concentrations supérieures à 1 ppm. L'inconvénient principal de ce type de capteur est donc leur faible sensibilité. Par ailleurs, même si la détection est rapportée à température ambiante dans certains travaux [1], le système est généralement chauffé à une température typiquement supérieure à 300°C.

Le principe des capteurs à ionisation consiste à ioniser le chlore lorsque celui-ci passe à proximité d'une source d'électrons (émission thermoionique). A partir du courant collecté, la teneur en chlore peut être estimée. Cette technique permet la détection de très faibles teneurs de chlore, en deçà de 100 ppb, indépendamment de la température et de l'humidité. L'inconvénient de cette méthode est cependant la non-portabilité de la méthode de mesure, interdisant une mesure *in situ.*

Le principe des capteurs opto-chimiques repose sur l'étude des propriétés optiques de films minces sensibles au gaz à détecter, ces films pouvant être sensibles à un seul gaz en particulier (principe du capteur sélectif). L'adsorption, ou la réaction du gaz au niveau du film sensible conduit à une modification effective de ses propriétés de fluorescence ou bien d'absorbance, à des longueurs d'ondes spécifiques. Le taux de variation de l'absorbance ou de la fluorescence permet de remonter à la concentration de l'agent chimique étudié. Dans le cas précis du chlore, les films sensibles mis en forme peuvent être la phénylporphyrine, la o-toluidine, des complexes ruthénium tris-bipyridyl ou bien des films nano-poreux contenant des molécules ou ions spécifiques (Br⁻, I⁻) [2]. Ces dispositifs opto-chimiques permettent la détection du chlore à faible teneur, jusqu'à 50 ppb [2]. Notons par ailleurs que la détection a lieu à température ambiante. L'inconvénient de ce type de capteur est le coût de fabrication d'un dispositif complet qui comprend notamment le film sensible, une diode et un détecteur.

Le document US 2002/117659 A1 décrit un capteur de type transistor à effet de champ comprenant un nanotube de carbone fonctionnalisé.

Pour les capteurs résistifs à partir de semi-conducteurs, c'est la mesure de la résistance du dispositif qui permet la détection des agents gazeux. Il s'agit du type de capteur chimique le plus fréquemment rencontré dans la littérature, notamment pour la détection du chlore. L'adsorption d'un gaz en surface d'un semi-conducteur peut induire un transfert de charge qui conduit à la génération de porteurs et à une modification de la conductivité du système. Les couches sensibles peuvent être des semi-conducteurs organiques comme la phtalocyanine métallée ou bien des semi-conducteurs d'oxyde métallique comme InO₃, WO₃ ou SnO₂. Les détecteurs à base de semi-conducteurs sont des dispositifs très sensibles au chlore. La littérature rapporte des dispositifs possédant des seuils de détection très bas : à partir de 50 ppb [3]. Notons cependant que la détection ne devient effective que lorsque ces capteurs sont chauffés, typiquement à des températures supérieures à 150°C. Le fait qu'ils ne fonctionnent pas à température ambiante constitue leur principal défaut. On remarque par ailleurs dans le cas précis du chlore que la sélectivité de ce type de capteur n'est jamais évoquée.

En résumé, parmi les différents dispositifs décrits ci-dessus, aucun ne satisfait totalement aux critères précédemment établis.

Depuis quelques années, un nouveau matériau très prometteur, le nanotube de carbone, est utilisé, dans de nombreuses études, comme élément sensible dans les capteurs chimiques.

Les dispositifs à base de nanotubes de carbone tirent profit des propriétés singulières de ce matériau. En premier lieu, les nanotubes de carbone présentent une très grande surface spécifique, qui peut atteindre 1500 m²/g et qui assure ainsi une très grande surface d'interaction avec l'atmosphère environnante. En second lieu, les nanotubes de carbone possèdent une conductivité électrique très élevée qui s'avère être extrêmement sensible à l'adsorption de molécules sur leur surface, et donc plus généralement à leur environnement. La combinaison de ces propriétés fait du nanotube de carbone un matériau très intéressant comme élément sensible dans les capteurs chimiques. De plus, la faible taille des nanotubes de carbone est favorable à la réalisation de dispositifs miniaturisés.

De nombreux types de capteurs chimiques à base de nanotubes sont recensés dans la littérature. Il peut s'agir de capteurs basés sur le principe des CNTFET (pour « Carbon NanoTube Field Effect Transistor »), de capteurs type résistifs basés sur la mesure de la résistance du système, de capteurs acoustiques, de capteurs à mesure d'impédance, de capteurs à ionisation ... Seuls les capteurs de type CNTFET et de type résistifs à base de nanotubes de carbone, les deux types les plus proches de la présente invention, seront explicités ci-après.

Une première approche consiste à disperser les nanotubes de carbone (mono-parois ou multi-parois) dans une matrice sensible. Le principe de fonctionnement est le même que les capteurs résistifs à semi-conducteurs (mesure de la variation de résistance du système). Les matrices étudiées sont soit de l'oxyde d'étain (SnO₂), soit des polymères (PMMA, polystyrène) ou encore de l'oxyde de tungstène (WO₃) [4,5]. Les gaz détectés par ces dispositifs sont le dioxyde d'azote (NO₂), le tétrahydrofurane (THF), des chlorométhanes et d'autres composés organiques volatils (COV). En comparant les dispositifs avec un témoin (sans nanotube), il apparaît que les capteurs comportant des nanotubes sont beaucoup plus compétitifs, notamment en termes de sensibilité [4]. Les seuils de détection observés à température ambiante peuvent être au mieux inférieurs au ppm (500 ppb pour le NO₂ dans la référence [5]).

Une autre approche s'intéresse à synthétiser directement des nanotubes de carbone au sein du dispositif « capteur ». Le principe de ce type de capteur est présenté dans la demande de brevet US 2007/0145356 [6] ; cependant aucun exemple de détection à l'aide d'un tel dispositif n'est présenté dans ce document. Dans ce type de dispositif, la croissance peut être contrôlée de manière à obtenir un unique nanotube de carbone mono-feuillet réalisant la jonction entres deux électrodes métalliques, déposées par lithographie. Le substrat en silicium, qui peut être polarisé, fait office de grille. Les premiers travaux, effectués en 2000 par Kong et coll. sur ces dispositifs mesurent la conductance du nanotube à la température ambiante en fonction de l'environnement gazeux [7]. Les limites de détection observées sont de 2 ppm pour NO₂, et 0,1% pour NH₃. En utilisant le même type de dispositif, mais cette fois-ci avec des nanotubes de carbone recouverts d'une fine couche de polyéthylèneimine, Qi et coll. ont pu réduire le seuil de sensibilité de NO₂ à 100 ppt [8].

Les nanotubes multi-parois peuvent être aussi utilisés comme élément sensible et synthétisés directement au sein du dispositif. De la même manière que dans le paragraphe précédent, des nanotubes multi-parois peuvent être synthétisés de manière latérale et en faible densité entre deux électrodes [9]. Ces capteurs, sensibles notamment à l'ammoniac, présentent un seuil de détection de 50 ppm [9]. Dans la plupart des dispositifs dont l'élaboration comprend une phase de synthèse de nanotubes multi-parois, la croissance des nanotubes est massive et est directement effectuée sur un substrat (Si, SiO₂ ou Si₃N₄) à partir d'une fine couche de catalyseur (quelques nanomètres). La mesure de la résistance du système est effectuée à l'aide d'électrodes interdigitées déposées préalablement (sous la couche de catalyseur) ou bien par dépôt de deux électrodes métalliques par-dessus le film formé par les nanotubes. Ce type de capteurs peut être chauffé pour améliorer les performances de détection. Dans l'exemple présenté dans la référence [10], le dispositif fonctionne à la température de 165°C et montre un seuil de détection très faible d'environ 10 ppb pour le dioxyde d'azote. D'autres gaz étudiés à l'aide du même capteur, l'éthanol et le benzène présentent, quant à eux, des seuils de détection beaucoup plus élevés (>> 1 ppm). Les seuils de détection du méthane (CH₄) et de l'hydrogène (H₂) mesurés par d'autres groupes à l'aide du même type de dispositif sont aussi très hauts (>1000 ppm). Parmi les dispositifs présentés dans ce paragraphe, seul le capteur sensible au méthane est étudié à température ambiante [11].

Une troisième approche à plusieurs étapes consiste à réaliser dans un premier temps, la synthèse des nanotubes de carbone, puis à les disperser dans un solvant, et enfin à déposer les nanotubes à partir de la dispersion précédemment obtenue sur un réseau d'électrodes lithographiées, l'évolution de la résistance entre les électrodes permettant ensuite de détecter les polluants ciblés par l'étude. Un dispositif composé d'agrégats de nanotubes mono-parois réalisant la connexion entre des électrodes interdigitées a également été développé. A l'aide de ce dispositif, fonctionnant à température ambiante et dans lequel les nanotubes sont recouverts d'une couche de polymère de polyéthylène chlorosulfoné, le seuil de détection du chlore observé reste assez élevé : > 2 ppm [12].

Les nanotubes multi-parois peuvent être aussi dispersés puis déposés de manière aléatoire sur des électrodes [13]. Avec un tel dispositif (à deux électrodes), Wang et coll. rapportent la détection de l'ammoniac à température ambiante dès 5 ppm.

Notons dans cette troisième approche que les nanotubes de carbone déposés sur les électrodes lors de la mise en forme du capteur sont aléatoirement orientés. Quelques études utilisent la technique de diélectrophorèse pour aligner les nanotubes de manière préférentielle perpendiculairement aux électrodes. La technique de diélectrophorèse consiste à appliquer un champ électrique alternatif entre les électrodes. En utilisant cette méthode de dépôt pour des nanotubes de carbone multi-parois, Suehiro et coll. ont réalisé un dispositif permettant de détecter l'ammoniac dès 500 ppb à température ambiante [14].

Quelques documents brevets présentent des capteurs chimiques basés sur la mesure de la conduction de nanotubes de carbone mono-feuillets, les nanotubes étant individuels ou organisés en réseaux entre des électrodes lithographiées [15-17]. Dans ces documents, une couche sensible est ajoutée au(x) nanotube(s) connecté(s) aux électrodes. La demande de brevet US 2006/0263255 rapporte l'utilisation de nanotubes mono-parois recouverts de particules de palladium pour la détection de l'hydrogène [17]. Les demandes internationales WO 2005/026694 et WO 2005/062031 présentent des dispositifs sensibles au CO₂ basés sur des nanotubes de carbone mono-parois recouverts par une couche de polyéthylèneimine [15,16]. Le polymère est déposé par simple ajout d'une goutte de solution sur le dispositif. D'autre agents fonctionnalisant sont présentés dans ces brevets (carbonates métalliques, composés aromatiques, divers composés aminés...) mais aucun exemple ne leur est associé. Il est important de noter que les agents fonctionnalisants sont déposés par imprégnation (physisorbtion) et ne sont pas greffés au nanotube de manière covalente. Le brevet US 7,312,095 propose de fonctionnaliser le(s) nanotube(s) mono-feuillet(s) intégré(s) dans un dispositif de capteur en faisant circuler un fort courant dans celui-ci tout en l'exposant à un réactif supposé sensible à un gaz spécifique [18]. Cependant aucun exemple n'est présenté dans ce dernier brevet.

La conception d'un dispositif répondant à l'ensemble des contraintes précédemment listées reste encore actuellement un défi qui n'est que partiellement relevé. La fabrication d'un tel capteur constitue donc un enjeu très fort.

### EXPOSÉ DE L'INVENTION

La présente invention vise à fournir un dispositif de type capteur chimique qui réponde aux besoins et aux problèmes techniques précédemment cités i.e. un dispositif sensible aux agents chimiques notamment aux agents chimiques gazeux, éventuellement toxiques. Le dispositif de la présente invention est defini dans la revendication 1 et se distingue en particulier par le fait qu'il est sélectif et très sensible, même à température ambiante. Il n'est donc pas forcément nécessaire de lui adjoindre un système de chauffage coûteux en énergie. Par ailleurs, le dispositif de la présente invention est simple à mettre en forme.

Ainsi, l'ensemble des problèmes techniques résolus par la présente invention sont les suivants :
- la sensibilité variable voire faible des capteurs de l'art antérieur ;
- la non-sélectivité de capteurs de l'art antérieur vis-à-vis d'un gaz donné ;
- l'encombrement de capteurs de l'art antérieur ne permettant que la détection par prélèvement et non la détection *in situ ;*
- la nécessité de chauffer les capteurs de l'art antérieur de type « capteurs résistifs » pour la détection des agents chimiques.
- l'emploi des techniques de lithographie coûteuses à mettre en oeuvre pour la fabrication des capteurs de l'art antérieur à base de nanotubes de carbone.

De plus, le dispositif selon l'invention est remarquable car il est utilisable pour détecter non seulement le chlore mais aussi tout composé chimique gazeux, que ce dernier soit toxique ou non.

La présente invention concerne donc un dispositif destiné à détecter au moins un composé chimique, comprenant au moins un nanotube de carbone à plusieurs couches de graphène, sur lequel est greffée au moins une molécule portant un groupement G₁ susceptible de réagir avec ledit composé chimique ou un précurseur d'un tel groupement G1, le au moins un nanotube de carbone étant un nanotube recuit.

Avantageusement, le dispositif selon la présente invention comprend au moins 2 nanotubes ; notamment au moins 10 nanotubes ; en particulier, au moins 50 nanotubes ; plus particulièrement, au moins 100 nanotubes et, tout particulièrement, au moins 200 nanotubes de carbone à plusieurs couches de graphène, chaque nanotube étant greffé par au moins une molécule et, de préférence, plusieurs molécules portant un groupement G₁ susceptible de réagir avec ledit composé chimique ou un précurseur d'un tel groupement G₁. Par « plusieurs molécules », on entend, dans le cadre de la présente invention, au moins 5, notamment au moins 10, en particulier, au moins 50 et tout particulièrement, au moins 100 molécules.

Les nanotubes de carbone mis en oeuvre dans le cadre de la présente invention sont des nanotubes à plusieurs couches de graphène. Ces nanotubes sont également connus sous les désignations : nanotubes multi-parois, nanotubes multi-feuillets ou MWNT pour « Multi-Wall NanoTubes ». Fait intéressant et remarquable, l'utilisation de nanotubes à plusieurs couches de graphène fonctionnalisés, i.e. des nanotubes dont la surface a été modifiée de manière covalente, ne compromet pas leurs propriétés de conduction contrairement aux nanotubes de carbone mono-feuillets.

L'homme du métier connaît différentes techniques permettant de préparer de tels nanotubes de carbone. A titre d'exemples, on peut citer le procédé chimique consistant à pyrolyser des sources carbonées sur des catalyseurs métalliques et s'apparentant au procédé CVD tels que notamment le procédé de pyrolyse objet de la demande internationale WO 2004/000727 [19]. Cette méthode est basée sur la décomposition catalytique d'un aérosol liquide mixte généré à partir d'une solution de ferrocène dissout dans du toluène (5%wt.). Un générateur d'aérosol à ultrasons (Pyrosol 7901, RBI Company, France) ou un injecteur (par exemple de type injecteur automobile) peut être utilisé. L'argon, employé comme gaz porteur (1 L/min), entraîne l'aérosol au niveau d'un réacteur en quartz chauffé à 850°C. Des nanotubes à plusieurs couches de graphène, alignés, de quelques centaines de micromètres de longueur possédant un diamètre compris entre dix et cent nanomètres sont récoltés sur les parois du réacteur après la synthèse.

Les nanotubes de carbone que comprend le dispositif selon l'invention sont des nanotubes longs : ils présentent une longueur comprise entre 1 µm et 1 mm, notamment entre 10 µm et 800 µm, en particulier entre 15 µm et 600 µm et, tout particulièrement, supérieure ou égale à 20 µm. Le diamètre de ces nanotubes est compris entre 2 et 150 nm, notamment entre 5 et 130 nm et, en particulier, entre 10 et 100 nm.

Enfin, les nanotubes de carbone que comprend le dispositif selon la présente invention sont des nanotubes recuits. Par « nanotubes recuits », on entend dans le cadre de la présente invention des nanotubes de carbone qui, une fois préparés, sont soumis, sous atmosphère inerte, à une température supérieure à 800°C, notamment supérieure à 1000°C, en particulier supérieure à 1500°C et, plus particulièrement, à une température d'environ 2000°C (i.e. 2000°C ± 200°C) pendant plusieurs heures. Par « plusieurs heures », on entend, dans le cadre de la présente invention, au moins 1, notamment au moins 6, en particulier, au moins 12 et tout particulièrement, au moins 18 heures. Ces conditions sont notamment celles mises en oeuvre lors de l'étape (a) du procédé ci-après. Ce recuit avantageusement effectué dans un four permet d'obtenir des nanotubes exempts de sous-produits de synthèse tels que des matériaux catalytiques à base de fer et mieux cristallisés car ils possèdent un ordre structural à longue distance plus grand. Les capteurs à base de nanotubes recuits présentent une très bonne qualité structurale, ce qui permet d'améliorer leur sensibilité comparée aux nanotubes bruts, i.e. des nanotubes n'ayant pas subi de recuit (voir les exemples ci-après).

L'invention se place de manière originale par rapport aux différents dispositifs de type capteurs, notamment ceux à base de nanotubes de carbone. Elle est basée sur l'utilisation des nanotubes longs à plusieurs couches de graphène comme élément sensible dans le dispositif. D'autre part, l'invention tire profit de la capacité des nanotubes de carbone à être fonctionnalisés, i.e. à être modifiés en leur surface par greffage covalent de fonctions chimiques ou de chaînes polymères. Le dispositif proposé intègre donc des nanotubes de carbone à plusieurs couches de graphène, fonctionnalisés possédant une affinité avec le gaz ciblé. Cet aspect novateur du dispositif permet de garantir la sélectivité.

Il convient de remarquer que la modification chimique de la surface des nanotubes de carbone par greffage, de manière covalente, d'une molécule portant un groupement G₁ susceptible de réagir avec ledit composé chimique ou un précurseur d'un tel groupement G₁ pour la détection sélective dudit composé constitue une approche différente des dispositifs de l'art antérieur [12], dans lesquels une couche polymère est déposée sur l'ensemble du dispositif capteur, après l'élaboration du système nanotubes/électrodes.

Par « molécule portant un groupement G₁ susceptible de réagir avec ledit composé chimique », on entend toute molécule naturelle ou synthétique, avantageusement organique, comprenant de quelques atomes à plusieurs dizaines voire centaines d'atomes. Cette molécule peut donc être une fonction chimique, une molécule simple ou une molécule présentant une structure plus complexe telle qu'une structure polymère. Quelle que soit la structure de cette molécule, les caractéristiques essentielles dans le cadre de la présente invention sont le fait que :
- d'une part, la molécule est liée au nanotube de carbone mis en oeuvre de façon covalente, au moyen d'une liaison impliquant un atome de ladite molécule et un atome dudit nanotube de carbone, ladite molécule comprend donc une fonction impliquée dans la liaison covalente avec la su1rface du nanotube ;
- d'autre part, la molécule comprend un groupement G₁ susceptible de réagir avec ledit composé chimique ou un précurseur d'un tel groupement G₁.

Il est clair pour l'homme du métier que le groupement G₁ ou le précurseur d'un tel groupement est différent de la fonction impliquée dans la liaison covalente avec la surface du nanotube.

Dans une première variante de l'invention, la molécule portant un groupement G₁ susceptible de réagir avec ledit composé chimique ou comprenant un précurseur d'un tel groupement (ci-après désignée molécule M) à greffer sur les nanotubes de carbone correspond à toute molécule organique susceptible, sous certaines conditions, de se greffer à la surface d'un nanotube de carbone par réaction radicalaire telle qu'un greffage chimique radicalaire, ladite molécule M comprenant en outre un groupement G₁ susceptible de réagir avec ledit composé chimique ou un précurseur d'un tel groupement. De telles molécules M comportent généralement au moins un groupe fonctionnel susceptible de réagir avec un radical.

Le terme « greffage chimique radicalaire » se réfère notamment à l'utilisation d'entités moléculaires possédant un électron non apparié pour former des liaisons de type liaison covalente avec la surface du nanotube, lesdites entités moléculaires étant générées indépendamment de la surface sur laquelle elles sont destinées à être greffées. Ainsi, la réaction radicalaire conduit à la formation de liaisons covalentes entre la surface du nanotube et le dérivé de la molécule M greffé.

Par « dérivé de la molécule M », on entend, dans le cadre de la présente invention, une unité chimique résultant de la molécule M, après que cette dernière a réagi par greffage chimique radicalaire avec la surface du nanotube mis en oeuvre dans le cadre de la présente invention. Il est clair pour l'homme du métier que le groupement G₁ ou le précurseur de ce groupement porté par la molécule M est différent de la fonction impliquée dans la liaison covalente avec la surface du nanotube.

La molécule portant un groupement G₁ susceptible de réagir avec ledit composé chimique ou un précurseur d'un tel groupement (molécule M) à greffer sur le nanotube de carbone est avantageusement un sel d'aryle clivable choisi dans le groupe constitué par les sels d'aryle diazonium, les sels d'aryle ammonium, les sels d'aryle phosphonium et les sels d'aryle sulfonium, ledit groupe aryle portant un groupement G₁ susceptible de réagir avec ledit composé chimique ou un précurseur d'un tel groupement. Dans ces sels, le groupe aryle est un groupe aryle qui peut être représenté par R tel que défini ci-après.

Parmi les sels d'aryle clivables, on peut en particulier citer les composés de formule (I) suivante :

R-N₂⁺, A⁻ (I)

dans laquelle :
- A représente un anion monovalent et
- R représente un groupe aryle R portant un groupement G₁ susceptible de réagir avec ledit composé chimique ou un précurseur d'un tel groupement.

A titre de groupe aryle des sels d'aryle clivables et notamment des composés de formule (I) ci-dessus, on peut avantageusement citer les structures carbonées aromatiques ou hétéroaromatiques, éventuellement mono- ou polysubstituées, constituées d'un ou plusieurs cycles aromatiques ou hétéroaromatiques comportant chacun de 3 à 8 atomes, le ou les hétéroatomes pouvant être N, O, P ou S. Le ou les substituants peuvent contenir un ou plusieurs hétéroatomes, tels que N, O, F, Cl, P, Si, Br ou S ainsi que des groupes alkyles en C₁ à C₆ notamment. Il est clair que, dans le cadre de la présente invention, de telles structures carbonées et/ou leurs éventuels substituants doivent porter au moins un groupement G₁ susceptible de réagir avec un composé chimique donné ou un précurseur d'un tel groupement.

Au sein des sels d'aryle clivables et notamment des composés de formule (I) ci-dessus, R est de préférence choisi parmi les groupes aryles substitués par des groupements attracteurs d'électrons tels que NO₂, COH, les cétones, CN, CO₂H, NH₂ (sous forme de NH₃⁺), les esters et les halogènes. Les groupes R de type aryle particulièrement préférés sont les radicaux nitrophényle et phényle portant en outre un groupement G₁ susceptible de réagir avec un composé chimique donné ou un précurseur d'un tel groupement.

Au sein des composés de formule (I) ci-dessus, A peut notamment être choisi parmi les anions inorganiques tels que les halogénures comme I⁻, Br⁻ et Cl⁻, les halogénoborates tels que le tétrafluoroborate, les perchlorates et les sulfonates et les anions organiques tels que les alcoolates, les carboxylates.

A titre de composés de formule (I), il est particulièrement avantageux d'utiliser un composé choisi dans le groupe constitué par le tétrafluoroborate de phényldiazonium, le tétrafluoroborate de 4-nitrophényldiazonium, le tétrafluoroborate de 4-bromophényldiazonium, le chlorure de 4-aminophényldiazonium, le chlorure de 4-aminométhylphényldiazonium, le chlorure de 2-méthyl-4-chlorophényldiazonium, le tétrafluoroborate de 4-benzoylbenzènediazonium, le tétrafluoroborate de 4-cyanophényldiazonium, le tétrafluoroborate du 4-carboxyphényldiazonium, le tétrafluoroborate de 4-acétamidophényldiazonium, le tétrafluoroborate de l'acide 4-phénylacétique diazonium, le sulfate de 2-méthyl-4-[(2-méthylphényl)diazényl]benzènediazonium, le chlorure de 9,10-dioxo-9,10-dihydro-1-anthracènediazonium, le tétrafluoroborate de 4-nitronaphtalènediazonium et le tétrafluoroborate de naphtalènediazonium, tous ces composés étant, si nécessaire, substitués par un groupement susceptible de réagir avec le composé chimique à détecter ou un précurseur d'un tel groupement. En effet, il est clair que si, parmi les composés listés ci-dessus, certains composés ne présentent pas de groupement G₁ susceptible de réagir avec un composé chimique donné ou un précurseur d'un tel groupement, un tel groupement ou un tel précurseur devra être introduit dans lesdits composés, par exemple, au moyen d'une substitution pour qu'ils deviennent utilisables dans le cadre de la présente invention.

Dans une seconde variante de l'invention, la molécule portant un groupement G₁ susceptible de réagir avec un composé chimique ou comprenant un précurseur d'un tel groupement et greffée sur les nanotubes de carbone est un polymère ou un copolymère principalement issu de plusieurs unités monomères identiques et/ou différentes, ledit polymère ou copolymère portant au moins un groupement G₁ susceptible de réagir avec ledit composé chimique ou un précurseur d'un tel groupement.

Avantageusement, la totalité ou une partie des unités monomères mises en oeuvre dans le cadre de la présente invention sont des monomères polymérisables par voie radicalaire. Par « monomères polymérisables par voie radicalaire », on entend des monomères susceptibles de polymériser en condition radicalaire après amorçage par une entité chimique radicalaire. Typiquement, il s'agit de molécules comportant au moins une liaison de type éthylénique, i.e. de molécules de type éthylénique. Les monomères vinyliques, notamment les monomères décrits dans les demandes internationales WO 2005/033378 et WO 2006/097611 sont particulièrement concernés [20, 21].

Selon une forme de réalisation particulièrement avantageuse de l'invention, le ou les monomères vinyliques sont choisis parmi les monomères de formule (II) suivante : 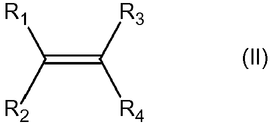 dans laquelle les groupes R₁ à R₄, identiques ou différents, représentent un atome monovalent non métallique tel qu'un atome d'halogène, un atome d'hydrogène, un groupe chimique saturé ou insaturé, tel qu'un groupe alkyle, aryle, un nitrile, un carbonyle, une amine, un amide ou un groupe-COOR₅ dans lequel R₅ représente un atome d'hydrogène ou un groupe alkyle en C₁-C₁₂ et de préférence en C₁-C₆.

Les monomères de formule (II) ci-dessus sont en particulier choisis dans le groupe constitué par l'acétate de vinyle, l'acrylonitrile, le méthacrylonitrile, le méthacrylate de méthyle, le méthacrylate d'éthyle, le méthacrylate de butyle, le méthacrylate de propyle, le méthacrylate d'hydroxyéthyle, le méthacrylate d'hydroxypropyle, le méthacrylate de glycidyle et leurs dérivés ; les acrylamides et notamment les méthacrylamides d'amino-éthyle, propyle, butyle, pentyle et hexyle, les cyanoacrylates, les di-acrylates et di-méthacrylates, les tri-acrylates et tri-méthacrylates, les tétra-acrylates et tétra-méthacrylates (tels que le pentaérythritol tétraméthacrylate), le styrène et ses dérivés, le parachloro-styrène, le pentafluoro-styrène, la N-vinyl pyrrolidone, la 4-vinyl pyridine, la 2-vinyl pyridine, les halogénures de vinyle, d'acryloyle ou de méthacryloyle, le di-vinylbenzène (DVB), et plus généralement les agents réticulants vinyliques ou à base d'acrylate, de méthacrylate, et de leurs dérivés.

Le polymère ou copolymère peut être greffé sur la surface du nanotube de façon directe ou indirecte. Par « greffage direct », on entend le cas où la liaison covalente entre la surface du nanotube et le polymère ou copolymère implique un atome d'un des monomères constituant ledit polymère ou copolymère et un atome de la surface dudit nanotube. Par « greffage indirect », on entend le cas où une entité moléculaire sépare le polymère de la surface du nanotube. Ainsi, cette entité moléculaire est liée par une liaison covalente à la surface du nanotube et par une autre liaison covalente au polymère ou copolymère. Une telle entité moléculaire est avantageusement issue d'une molécule M telle que précédemment définie à l'exception que l'entité moléculaire ne comprend pas obligatoirement un groupement G₁ ou un précurseur d'un tel groupement. Plus particulièrement, cette entité moléculaire correspond à un dérivé du dérivé de la molécule M tel que précédemment défini à l'exception que l'entité moléculaire ne comprend pas obligatoirement un groupement G₁ ou un précurseur d'un tel groupement. En effet, une fois que ledit dérivé a réagi par greffage chimique radicalaire avec la surface du nanotube, le dérivé greffé réagit, par réaction radicalaire, avec un monomère tel que précédemment défini. Dans cette variante, il est clair que le polymère peut éventuellement contenir, entre certaines des unités monomères le constituant, une ou plusieurs entités moléculaires utilisées pour greffer ledit polymère à la surface du nanotube.

Le polymère ou copolymère ainsi obtenu et greffé à la surface du nanotube porte au moins un groupement G₁ susceptible de réagir avec ledit composé chimique ou un précurseur d'un tel groupement. Ce groupement peut notamment être porté par au moins une des unités monomères. Ainsi, à titre d'exemple, pour un polymère ou copolymère comprenant des monomères de formule (II), au moins un de ces monomères comprend au moins un des groupes R₁ à R₄ qui porte ledit groupement susceptible de réagir avec le composé chimique à détecter et qui est non impliqué dans la polymérisation radicalaire. En variante, le polymère ou copolymère obtenu peut, si nécessaire, être substitué par un groupement G₁ ou un précurseur d'un tel groupement.

Le film de polymère ou copolymère ainsi obtenu et greffé à la surface du nanotube présente une longueur inférieure à 50 nm, avantageusement inférieure à 40 nm, notamment inférieure à 30 nm et, en particulier, inférieure à 20 nm.

Le groupement G₁ susceptible de réagir avec un composé chimique à détecter mis en oeuvre dans le cadre de la présente invention peut être n'importe quel type de groupement susceptible, lorsqu'il est mis en présence du composé chimique à détecter, de réagir avec celui-ci, directement ou non.

Dans une première forme de mise en oeuvre de la présente invention, le groupement G₁ possède une affinité pour le composé chimique et réagit avec ce dernier. Lors de cette réaction, des liaisons notamment des liaisons faibles du type forces de Van der Waals apparaissent entre le groupement G₁ et le composé chimique. Dans ce cas, le groupement G₁ est susceptible de réagir avec le composé chimique de façon à former un complexe avec ce dernier ou à physisorber le composé chimique sur le groupement G₁.

Dans une seconde forme de mise en oeuvre de la présente invention, le groupement G₁ réagit avec le composé chimique, directement ou non, pour donner un autre groupement G₂ différent du groupement G₁. Lors de la réaction en présence du composé chimique, le groupement G₁ peut être substitué par un groupement différent qui correspond au groupement G₂. En variante, en présence du composé chimique, au moins un atome peut être ajouté ou enlevé au groupement G₁ pour le transformer en un groupement différent qui correspond au groupement G₂, ce dernier pouvant être électriquement chargé ou non.

La physisorption du composé chimique sur le groupement G₁, la complexation du groupement G₁ et du composé chimique ou le remplacement du groupement G₁ par un groupement G₂ a pour conséquence de modifier la résistance du nanotube, comparée à la résistance du nanotube comprenant le groupement G₁ en l'absence du composé chimique.

De tels groupements G₁ susceptibles d'être mis en oeuvre dans le cadre de la présente invention correspondent généralement à des groupements comportant au moins une liaison covalente entre un hétéroatome et un autre élément correspondant à un carbone, un hydrogène ou un autre hétéroatome. Le (ou les) hétéroatome (s) est (sont) généralement choisi (s) parmi N, O, S, Cl, Br et Si.

Avantageusement, ledit groupement G₁ est choisi dans le groupe constitué par les fonctions hydroxyle, thiol, azide, époxyde, azyridine, amine, nitrile, isocyanate, thiocyanate, nitro, amide, halogénure notamment halogénure d'alkyle, acide carboxylique et ester.

Par « précurseur d'un groupement G₁ susceptible de réagir avec un composé chimique », on entend, dans le cadre de la présente invention, un groupement qui, par nature, ne peut directement réagir avec le composé chimique mais qui peut, par une réaction chimique simple, donner le groupement G₁. Un tel précurseur peut, par exemple, être un groupement G₁ protégé par un groupement protecteur. L'homme du métier connaît différents types de précurseurs et différents procédés pour les transformer en groupements G₁ particuliers susceptibles de réagir avec un composé chimique donné.

A titre d'exemples, le tableau 1 présente des composés chimiques, les groupements G₁ qui leur sont associés, la réaction mise en oeuvre et éventuellement les éventuels groupements G₂ obtenus en présence dudit composé, R' représentant une partie de la molécule portant le groupement G₁.

**Tableau 1**

| Composé chimique à détecter | Formule dudit composé | Fonction chimique greffée | Réaction |
|---|---|---|---|
| Chlore | Cl₂ | R'-NH₂ | Cl₂ + R'-NH₂ → R-NHCl + HCl |
| Chlorure de thionyle | SOCl₂ | R'-OH R'-NH₂ | R'-OH + SOCl₂ → R'-Cl + SO₂ + HCl |
| Ammoniac | NH₃ | -COOH PHEMA(poly(2-hydroxyéthyl) méthacrylate) PAA poly(acide acrylique) | Acido-basique |
| Sarin | C₄H₁₀O₂PF | R'-F (polymères fluorés) | affinité entre composés fluorés |
| Acide cyanhydrique | HCN | P4PV poly(4-vinylpyridine) R'-NH₂ | Acido-basique |
| Phosphine | PH₃ | (1) -COOH (2) -R'-CH₂-X (X : Cl, Br, I) | (1) Acido-basique (2) PH₃ + R'-CH₂-X → H₃P^{- +}CH-R' |

Le dispositif selon la présente invention comprend en outre
- un support,
- et deux électrodes disposées sur ledit support,
les nanotubes de carbone que comprend le dispositif de la présente invention assurant un contact électrique entre ces deux électrodes.

En effet, le dispositif de l'invention est un capteur résistif, i.e. qui utilise la résistance des nanotubes de carbone à plusieurs couches de graphène comme moyen de transduction pour la détection d'un composé chimique donné. La résistance des nanotubes de carbone greffés qui assurent le contact entre ces deux électrodes est mesurée. Sous l'effet d'un composé chimique réagissant avec le groupement G₁ que portent les molécules greffées sur les nanotubes de carbone pour se physisorber audit groupement G₁, pour se complexer avec ledit groupement G₁ ou pour donner le groupement G₂, la résistance des nanotubes varie d'une manière spécifique qui dépend de la nature et de la teneur du composé détecté.

Le support que comprend le dispositif selon la présente invention peut être un quelconque support permettant de mettre en oeuvre la présente invention. Il peut également être sensiblement plan et d'une forme quelconque telle qu'une forme carrée, rectangulaire, ronde ou ovale. Avantageusement, il peut être en un matériau isolant tel que de la silice, du verre, un polymère, un plastique, etc...

Les électrodes que comprend le dispositif selon la présente invention sont constituées d'une matière conductrice. Lesdites électrodes sont en un quelconque métal ou matériau métallique, avantageusement choisi dans le groupe constitué par Au, Pd, Pt, Al, Cr, Ni, Ti, ITO, W et acier, en un matériau multicouche ou en un matériau composite métal/matériau métallique tel que Ti/Au, Cr/Au, Ti/Pd ou Ti/Au.

Les électrodes peuvent également être d'une quelconque forme permettant de mettre en oeuvre la présente invention. Avantageusement, les électrodes mises en oeuvre dans le dispositif de l'invention présentent une configuration en peigne interdigité, en spirale ou concentrique. De façon préférée, les électrodes que comprend le dispositif selon l'invention présentent une configuration en peigne interdigité avantageusement comprenant, pour chaque électrode, au moins 3 bras, notamment au moins 5 bras et, en particulier, au moins 10 bras.

Toute technique connue de l'homme du métier permettant de préparer à la surface d'un support deux électrodes est utilisable dans le cadre de la présente invention. Toutefois, l'utilisation de nanotubes de carbone à plusieurs couches de graphène longs présentant, de façon avantageuse, une longueur supérieure ou égale à 20 µm, permet d'envisager des espacements inter-électrode importants. Avantageusement, ces espacements sont compris entre 1 et 300 µm ; notamment compris entre 5 et 200 µm ; en particulier, supérieurs à 20 µm et, plus particulièrement, supérieurs à 50 µm. Ceci permet d'avoir accès à des techniques simples et relativement peu coûteuses pour l'élaboration des électrodes comme les techniques de dépôt sous vide de métaux par exemple par thermo-évaporation, par plasma (ou PECVD pour « Plasma-Enhanced chemical Vapor Deposition ») ou par pulvérisation.

A titre d'exemple de procédé de préparation des électrodes du dispositif selon la présente invention, ces dernières sont préalablement déposées sur une lame en verre dans une chambre d'évaporation. Elles sont constituées d'un empilement de deux couches minces : une couche mince métallique reposant sur une couche d'accroche en chrome ou en titane de quelques nanomètres qui assure l'adhésion avec la surface du verre.

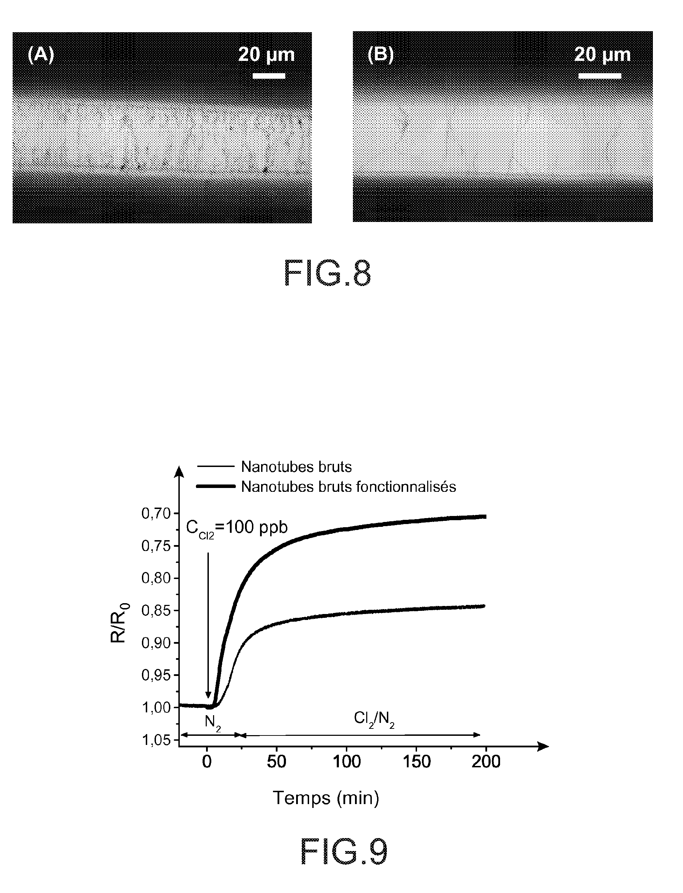

Les nanotubes de carbone que comprend le dispositif de la présente invention présentent une orientation sensiblement perpendiculaire vis-à-vis des deux électrodes. De plus, ces nanotubes sont disposés de façon homogène sur lesdites électrodes. Par « disposition homogène », on entend des nanotubes de carbone régulièrement répartis entre les électrodes avec peu ou pas d'amas de nanotubes. La figure 8B est une illustration d'une disposition homogène de nanotubes. Ainsi, l'utilisation d'une technique telle que la technique de diélectrophorèse pour disposer les nanotubes sur les électrodes conduit à une disposition homogène des nanotubes de carbone, préférentiellement orientés perpendiculairement entre les électrodes avantageusement interdigitées. Cette technique permet aussi de n'utiliser qu'une faible quantité de nanotubes de carbone pour assurer le contact entre les électrodes, ce qui réduit le coût de fabrication du dispositif et augmente la surface spécifique en contact avec l'air ambiant.

Enfin, le dispositif objet de la présente invention comprend, en outre, des moyens permettant d'appliquer un courant électrique ou un potentiel donné aux électrodes et de contrôler la résistance du dispositif. Ces moyens comprennent avantageusement un ou plusieurs éléments choisis parmi
- une source électrique telle qu'une batterie,
- des moyens de connexion des électrodes à ladite source électrique tels qu'un circuit,
- des moyens de commande et des moyens de mesure afin de pouvoir régler, suivre et/ou contrôler le potentiel appliqué aux électrodes et/ou la résistance des nanotubes.

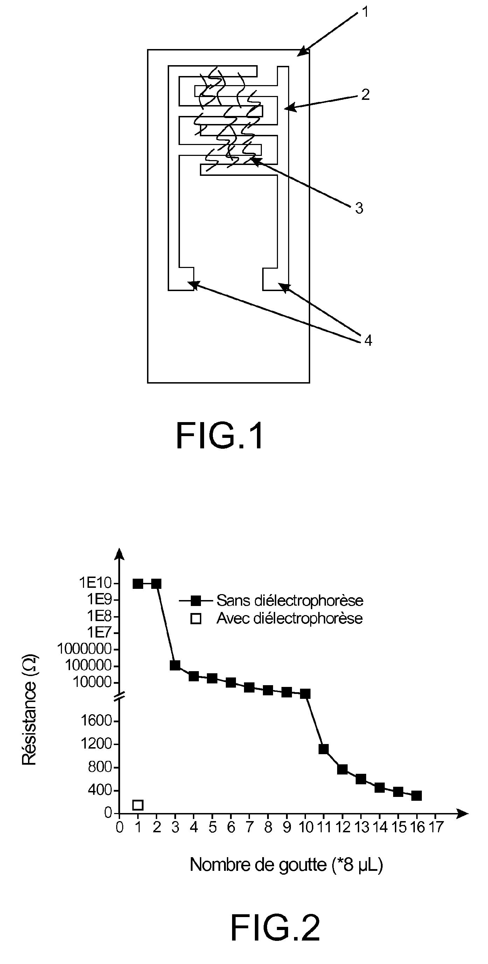

La figure 1 est une représentation schématique d'un dispositif selon la présente invention. Ce dispositif est constitué d'une lame de verre correspondant au support (1), de deux électrodes (2) conductrices, interdigitées présentant chacune trois bras, de nanotubes de carbone (3) multi-feuillets greffés réalisant un contact électrique entre les deux électrodes et des moyens (4) permettant de suivre les variations de la résistance des nanotubes et donc la résistance du dispositif. L'espacement utile entre les électrodes est compris entre 1 et 300 µm. Le peigne d'électrode occupe une surface d'environ 100 mm² sur un support dont la surface est comprise entre 400 mm² et 10 cm², notamment entre 400 mm² et 1 cm².

Le dispositif objet de la présente invention permet la détection de manière sélective et à faible teneur (< 1 ppm) d'agents chimiques gazeux notamment toxiques, comme en particulier le chlore. Cette détection est possible à une température modérée, avantageusement inférieure à 100°C, notamment inférieure à 80°C, en particulier, inférieure à 60°C, plus particulièrement, inférieure à 40°C. De façon particulièrement préférée, la détection est effectuée à température ambiante, i.e. à une température comprise entre 20°C ± 5°C. Dans de telles conditions, le chlore peut être, à titre d'exemple, détecté pour des teneurs inférieures à 27 ppb. Le fait de pouvoir réaliser une détection à température ambiante permet d'éviter l'ajout d'un système chauffant au dispositif pour son bon fonctionnement.

Un critère supplémentaire vient s'ajouter aux caractéristiques précédemment discutées du dispositif selon la présente invention. La résistance initiale du dispositif, qui est un paramètre majeur pour son bon fonctionnement et pour la reproductibilité des détections et quantifications, peut être finement contrôlée (± 100 **Ω**) via la concentration de la dispersion à partir de laquelle sont prélevés les nanotubes de carbone à déposer sur les électrodes. Avantageusement, il est possible de fabriquer des dispositifs selon la présente invention en série possédant les mêmes caractéristiques. Un étalonnage individualisé, i.e. pour chaque dispositif fabriqué, peut ainsi être évité.

La présente invention concerne également un système comprenant au moins deux dispositifs tels que précédemment définis. Avantageusement, un tel système comprend au moins 3 dispositifs, notamment au moins 5 dispositifs, en particulier au moins 10 dispositifs et, plus particulièrement, au moins 15 dispositifs tels que ceux précédemment définis. Parmi ces dispositifs, certains voire tous se différencient par le gaz ciblé, i.e. par le groupement G₁ porté par les nanotubes. Les dispositifs que présente le système selon l'invention peuvent être assemblés et fonctionner en parallèle. Le système devient alors un système de multi-capteurs, communément appelé « nez électronique ». Ce système permet *in fine* la détection de nombreux agents chimiques, chaque agent chimique ayant une réponse propre à chaque dispositif constituant le système.

La présente invention concerne aussi l'utilisation d'un dispositif ou d'un système tel que précédemment défini pour détecter et éventuellement quantifier un (ou plusieurs) composé(s) chimique(s) gazeux. Tout composé chimique gazeux est susceptible d'être détecté et/ou quantifié en utilisant un dispositif ou un système selon l'invention. Avantageusement, ledit composé chimique gazeux est choisi dans le groupe constitué par les composés organiques volatils, l'hydrogène, le monoxyde de carbone, le dioxyde de carbone, le chlore et les composés chlorés, l'ammoniac, les gaz organo-phosphorés tels que le sarin et le diméthylméthylphosphonate, l'acide cyanhydrique, le chlorure de thionyle, la phosphine, le tétrahydrofurane, le méthane et le diméthyl méthylphosphonate.

La présente invention concerne donc un procédé pour détecter et éventuellement quantifier un composé chimique gazeux consistant à mettre un dispositif selon l'invention dans l'environnement dans lequel ledit composé est présent ou susceptible d'être présent et à suivre la variation d'au moins une caractéristique électrique du dispositif. A titre d'exemples, cette caractéristique peut être la résistance, l'impédance et/ou la capacité du dispositif.

Enfin, la présente invention concerne un procédé de préparation d'un dispositif destiné à détecter au moins un composé chimique tel que précédemment défini.

Ledit procédé comprend une étape consistant à déposer, sur deux électrodes, au moins un nanotube de carbone à plusieurs couches de graphène, sur lequel est greffée au moins une molécule portant un groupement G₁ susceptible de réagir avec ledit composé chimique ou un précurseur d'un tel groupement G₁, de façon à ce que ledit nanotube de carbone assure un contact électrique entre lesdites électrodes.

Toute technique connue pour déposer un nanotube de carbone préalablement préparé et greffé est utilisable dans le cadre de la présente invention. Toutefois, compte-tenu des avantages déjà évoqués, ledit dépôt est effectué par diélectrophorèse. Avantageusement, ladite étape de dépôt consiste à (i) disposer sur les électrodes un volume donné d'une solution S₁ dans laquelle des nanotubes de carbone préalablement préparés et greffés tels que précédemment définis sont dispersés ; (ii) à appliquer une tension alternative sinusoïdale crête à crête entre les électrodes et (iii) à étuver le dispositif obtenu à l'étape (ii).

Lors de l'étape (i), les électrodes mises en oeuvre sont telles que précédemment définies et sont disposées sur un support tel que précédemment défini. Par conséquent, le terme « dispositif » comprend le support, les électrodes et les nanotubes de carbone greffés et disposés sur les électrodes. La solution S₁ dans laquelle les nanotubes de carbone greffés sont dispersés contient, en tant que solvant, un solvant organique ou alternativement un solvant aqueux contenant un tensioactif. Tout solvant organique connu de l'homme du métier est utilisable. Toutefois, ce solvant est avantageusement choisi dans le groupe constitué par le méthanol, l'éthanol, le propanol, l'isopropanol, le toluène, l'acétate d'éthyle, le tétrahydrofurane, l'acétone, la diméthylformamide et l'isopropyl 1,4-dioxane. Dans le cas d'une solution S₁ contenant, en tant que solvant, un solvant aqueux contenant un tensioactif, tout tensioactif connu de l'homme du métier est utilisable. Avantageusement, ledit tensioactif appartient à un type choisi parmi les tensioactifs anioniques, les tensioactifs cationiques, les tensioactifs zwitterioniques et les tensioactifs neutres (non-ioniques) et, notamment, les tensioactifs décrits dans la demande internationale WO 2008/078052 [22].

Les nanotubes de carbone greffés sont présents, dans la solution S₁, en une quantité comprise entre 0,1 et 1000 mg/L, notamment entre 1 et 500 mg/L, en particulier, entre 5 et 250 mg/L et, plus particulièrement, entre 10 et 100 mg/L de solution S₁.

Les nanotubes de carbone greffés peuvent être maintenus dispersés dans la solution S₁ par n'importe quelle technique connue de l'homme du métier. A titre d'exemples, on peut citer une simple agitation par ultrasons, une agitation manuelle, une agitation mécanique à l'aide d'agitateurs mécaniques à tiges, pales, hélices, etc.... ou une combinaison de ces techniques d'agitation. Il convient de remarquer que le fait que les nanotubes de carbone soient greffés favorise leur dispersion dans la solution S₁ (voir exemple 1 ci-après).

Le volume de solution S₁ déposée sur les électrodes est avantageusement compris entre 0,1 µl et 10 ml, notamment entre 0,5 µl et 1 ml, en particulier, entre 1 µl et 100 µl et, tout particulièrement, entre 5 µl et 50 µl. la solution S₁ est avantageusement déposée sous forme d'une ou plusieurs gouttes.

L'étape (ii) est avantageusement mise en oeuvre durant l'évaporation du ménisque, formé par la ou les gouttes de solution S₁ déposée sur les électrodes. La tension alternative sinusoïdale crête à crête appliquée entre les électrodes est comprise entre 5 et 50 V, notamment entre 10 et 30 V et, en particulier, est de l'ordre de 20 V (i.e. 20 ± 5 V). La gamme de fréquence employée lors de l'étape (ii) est comprise entre 100 kHz et 100 MHz et notamment entre 5 à 30 MHz.

Lors de l'étape (iii), le dispositif est mis à l'étuve à une température comprise entre 50 et 200°C, notamment entre 100 et 150°C, et, en particulier, de l'ordre de 120°C (i.e. 120 ± 5°C), pendant une durée comprise entre 15 min et 36 h, notamment entre 8 et 24 h, et, en particulier, de l'ordre de 12 h (i.e. 12 h ± 30 min) avant utilisation. La gamme de résistance initiale pour laquelle le fonctionnement du capteur chimique est optimal (sensibilité, rapport signal sur bruit et stabilité les meilleurs) se situe entre 100 et 500 **Ω**.

Le procédé de la présente invention comprend une étape préalable consistant à greffer sur les nanotubes de carbone ladite molécule portant un groupement G₁ susceptible de réagir avec un composé chimique donné ou un précurseur d'un tel groupement.

Toute technique de greffage connue de l'homme du métier est utilisable dans le cadre de la présente invention. Toutefois, une technique mise en oeuvre de façon avantageuse est celle décrite dans la demande internationale WO 2008/078052 [22].

Ainsi, cette étape préalable de greffage consiste à soumettre, en présence d'au moins un nanotube de carbone, une solution S₂ contenant au moins une molécule portant un groupement G₁ susceptible de réagir avec un composé chimique donné ou un précurseur de ce groupement ou un précurseur d'une telle molécule, à des conditions permettant la formation d'au moins une entité radicalaire à partir de ladite molécule ou dudit précurseur.

La solution S₂ mise en oeuvre dans l'étape de greffage du procédé selon la présente invention contient, en tant que solvant, un solvant qui peut être :
- soit un solvant protique, i.e. un solvant qui comporte au moins un atome d'hydrogène susceptible d'être libéré sous forme de proton et avantageusement choisi dans le groupe constitué par l'eau, l'eau désionisée, l'eau distillée, acidifiées ou basiques, l'acide acétique, les solvants hydroxylés comme le méthanol et l'éthanol, les glycols liquides de faible poids moléculaire tels que l'éthylèneglycol, et leurs mélanges ;
- soit un solvant aprotique, i.e. un solvant qui n'est pas susceptible de libérer un proton ou d'en accepter un dans des conditions non extrêmes et avantageusement choisi parmi la diméthylformamide (DMF), l'acétone, l'acétonitrile et le diméthyl sulfoxyde (DMSO) ;
- soit un mélange d'au moins un solvant protique et d'au moins un solvant aprotique.

Les conditions permettant la formation d'au moins une entité radicalaire dans l'étape de greffage du procédé de la présente invention sont des conditions qui permettent la formation d'entités radicalaires en l'absence de l'application d'une quelconque tension électrique au mélange réactionnel comprenant un solvant, au moins un nanotube, au moins une molécule portant un groupement G₁ susceptible de réagir avec un composé chimique donné ou un précurseur de ce groupement ou un précurseur d'une telle molécule.

Ces conditions impliquent des paramètres tels que, par exemple, la température, la nature du solvant, la présence d'un additif particulier, l'agitation, la pression alors que le courant électrique n'intervient pas lors de la formation des entités radicalaires. Les conditions permettant la formation d'entités radicalaires sont nombreuses et ce type de réaction est connu et étudié en détail dans l'art antérieur.

Il est ainsi par exemple possible d'agir sur l'environnement thermique, cinétique, chimique, photochimique ou radiochimique de la molécule portant un groupement G₁ susceptible de réagir avec un composé chimique donné ou un précurseur de ce groupement (ou un précurseur d'une telle molécule) afin de la (ou le) déstabiliser pour qu'elle (ou qu'il) forme une entité radicalaire. Il est bien entendu possible d'agir simultanément sur plusieurs de ces paramètres.

Dans le cadre de la présente invention, les conditions permettant la formation d'entités radicalaires lors de l'étape de greffage selon l'invention sont typiquement choisies dans le groupe constitué par les conditions thermiques, les conditions cinétiques, les conditions chimiques, les conditions photochimiques, les conditions radiochimiques et leurs combinaisons auxquelles la molécule ou son précurseur est soumis(e). Avantageusement, les conditions mises en oeuvre dans le cadre de l'étape de greffage du procédé selon la présente invention sont choisies dans le groupe constitué par les conditions thermiques, les conditions chimiques, les conditions photochimiques, les conditions radiochimiques et leurs combinaisons entre elles et/ou avec les conditions cinétiques. Les conditions mises en oeuvre dans le cadre de l'étape de greffage du procédé selon la présente invention sont plus particulièrement des conditions chimiques.

L'environnement thermique est fonction de la température. Son contrôle est aisé avec les moyens de chauffage habituellement employés par l'homme du métier. L'utilisation d'un environnement thermostaté présente un intérêt particulier puisqu'il permet un contrôle précis des conditions de réaction.

L'environnement cinétique correspond essentiellement à l'agitation du système et aux forces de frottement. Il ne s'agit pas ici de l'agitation des molécules en elle-même (élongation de liaisons etc.), mais du mouvement global des molécules.

Ainsi, lors de ladite étape de greffage, la solution S₂ est soumise à une agitation mécanique et/ou à un traitement aux ultra-sons. Dans une première variante, on soumet la suspension mise en oeuvre lors de l'étape de greffage à une forte vitesse de rotation par le biais d'un agitateur magnétique et d'un barreau aimanté et ce, pendant une durée comprise entre 5 min et 24 h d'agitation, notamment comprise entre 10 min et 12 h et, en particulier, entre 15 min et 6 h. Dans une seconde variante, on soumet la suspension mise en oeuvre lors de l'étape de greffage à un traitement aux ultra-sons notamment en utilisant un bac à ultra-sons, typiquement d'une puissance d'absorption de 500 W et à une fréquence 25 ou 45 kHz et ce, pendant une durée comprise entre 5 min et 24 h d'agitation, notamment comprise entre 15 min et 12 h et, en particulier, entre 30 min et 6 h.

Enfin, l'action de rayonnements divers tels que rayonnements électromagnétiques, rayonnements γ, rayons UV, faisceaux d'électrons ou d'ions peut également déstabiliser suffisamment la molécule M pour qu'elle forme des radicaux. La longueur d'onde employée sera choisie, sans aucun effort inventif, en fonction de la molécule M utilisée. Par exemple, une longueur d'onde d'environ 306 nm sera utilisée pour le 4-hexylbenzènediazonium.

Dans le cadre des conditions chimiques, on emploie dans le milieu réactionnel un ou plusieurs amorceur(s) chimique(s). La présence d'amorceurs chimiques est souvent couplée à des conditions environnementales non chimiques, telles qu'exposées ci-dessus. Typiquement, un amorceur chimique dont la stabilité est moins grande que celle de la molécule ou du précurseur mis en oeuvre dans les conditions environnementales choisies va évoluer sous une forme instable qui agira sur ces derniers et engendrera, à partir d'eux, la formation d'entités radicalaires. Il est également possible d'employer des amorceurs chimiques dont l'action n'est pas liée essentiellement aux conditions environnementales et qui peuvent agir sur de vastes plages de conditions thermiques ou encore cinétiques. L'amorceur sera de préférence adapté à l'environnement de la réaction, par exemple au solvant employé.

Il existe de nombreux amorceurs chimiques. On en distingue généralement trois types en fonction des conditions environnementales employées :
- les amorceurs thermiques dont les plus courants sont les peroxydes ou les composés azoïques. Sous l'action de la chaleur, ces composés se dissocient en radicaux libres. Dans ce cas, la réaction est effectuée à une température minimum correspondant à celle nécessaire à la formation de radicaux à partir de l'amorceur. Ce type d'amorceurs chimiques est en général utilisé spécifiquement dans un certain intervalle de température, en fonction de leur cinétique de décomposition ;
- les amorceurs photochimiques ou radiochimiques qui sont excités par le rayonnement déclenché par irradiation (le plus souvent par UV, mais aussi par radiations γ ou par faisceaux d'électrons) permettent la production de radicaux par des mécanismes plus ou moins complexes. Le Bu₃SnH et l'I₂ appartiennent aux amorceurs photochimiques ou radiochimiques ;
- les amorceurs essentiellement chimiques, ce type d'amorceurs agissant rapidement et dans des conditions normales de température et de pression sur la molécule ou son précurseur pour lui permettre de former des radicaux. De tels amorceurs ont généralement un potentiel d'oxydoréduction qui est inférieur au potentiel de réduction de ladite molécule ou dudit précurseur utilisé(e) dans les conditions de réaction. Selon la nature de la molécule ou de son précurseur, il peut ainsi s'agir par exemple d'un métal réducteur, tel que du fer, zinc, nickel ; d'un métallocène ; d'un réducteur organique comme l'acide hypophosphoreux (H₃PO₂) ou l'acide ascorbique ; d'une base organique ou inorganique dans des proportions suffisantes pour permettre une déstabilisation de la molécule ou de son précurseur. Avantageusement, le métal réducteur utilisé en tant qu'amorceur chimique se présente sous forme finement divisée, comme de la laine (également appelée plus communément « paille ») métallique ou de la limaille métallique. Généralement, lorsqu'une base organique ou inorganique est utilisée comme amorceur chimique, un pH supérieur ou égal à 4 est généralement suffisant. Des structures de type réservoir de radicaux, comme des matrices polymères préalablement irradiées par un faisceau d'électrons ou par un faisceaux d'ions lourds et/ou par l'ensemble des moyens d'irradiations cités précédemment, peuvent également être employées en tant qu'amorceurs chimiques pour déstabiliser la molécule ou son précurseur et conduire à la formation d'entités radicalaires à partir de cette dernière.

Lors de l'étape de greffage du procédé selon la présente invention, les nanotubes de carbone sont présents, dans la solution S₂, en une quantité comprise entre 1.10⁻⁵ g/ml et 1.10⁻¹ g/ml de solution S₂ et avantageusement entre 1.10⁻⁴ g/ml et 1.10⁻² g/ml de solution S₂.

De plus, lors de l'étape de greffage du procédé selon la présente invention, la concentration des composés solides utilisés, notamment, les nanotubes de carbone et les amorceurs chimiques tels que de la paille de fer sont présents, dans la solution S₂, en une quantité comprise entre 1.10⁻⁵ g/ml et 1 g/ml de solution S₂ et avantageusement entre 1.10⁻⁴ g/ml et 1.10⁻¹ g/ml de solution S₂.

Plus particulièrement, le procédé selon l'invention comprend les étapes successives suivantes :
a) éventuellement, recuire des nanotubes de carbone à plusieurs couches de graphène, notamment dans les conditions précédemment décrites,
b) mettre lesdits nanotubes éventuellement recuits à l'étape (a) au contact d'une solution S₂ contenant au moins une molécule portant un groupement G₁ susceptible de réagir avec ledit composé chimique ou un précurseur d'un tel groupement ou au moins un précurseur de celle-ci ;
c) soumettre le mélange de l'étape (b) à des conditions non-électrochimiques de façon à greffer, sur lesdits nanotubes, ladite molécule ou ledit précurseur ;
d) récupérer les nanotubes greffés obtenus après l'étape (c) et les déposer sur deux électrodes, notamment, par diélectrophorèse.

La molécule portant un groupement G₁ susceptible de réagir avec un composé chimique donné ou un précurseur d'un tel groupement mis en oeuvre dans le procédé selon l'invention est avantageusement une molécule M telle que précédemment définie.

Par « précurseur de celle-ci », on entend dans le cadre de la présente invention un précurseur d'une molécule portant un groupement G₁ susceptible de réagir avec un composé chimique donné ou un précurseur de ce groupement.

Dans une première variante, on entend plus particulièrement par « précurseur de celle-ci » une molécule séparée de la molécule M par une étape opératoire unique et aisée à mettre en oeuvre.

Généralement, les précurseurs présentent une stabilité plus importante que la molécule M dans les mêmes conditions environnementales. L'homme du métier connaît différents couples « précurseur de molécule M »/« molécule M ». Ainsi, par exemple, les arylamines sont des précurseurs des sels d'aryle diazonium. En effet, par simple réaction, par exemple, avec NaNO₂ dans un milieu aqueux acide, ou avec NOBF₄ en milieu organique, il est possible de former les sels d'aryle diazonium correspondants.

A titre de précurseur de molécule M, on peut notamment citer les précurseurs de sels d'aryle diazonium, ledit précurseur de ladite molécule est de formule (II) suivante :

R-NH₂ (II),

R étant un groupe aryle tel que défini précédemment.

A titre de précurseur de molécule M susceptible d'être mis en oeuvre dans le cadre de la présente invention, il est particulièrement avantageux d'utiliser un précurseur choisi dans le groupe constitué par la phénylamine, la 4-nitrophénylamine, la 4-bromophénylamine, la 4-aminophénylamine, la 2-méthyl-4-chlorophénylamine, la 4-benzoylbenzèneamine, la 4-cyanophénylamine, la 4-carboxyphénylamine, la 4-acétamidophénylamine, le tétrafluoroborate de l'acide 4-phénylacétique diazonium, la 2-méthyl-4-[(2-méthylphényl)diazényl]amine, la 9,10-dioxo-9,10-dihydro-1-anthracèneamine, la 4-nitronaphtalèneamine et la naphtalèneamine, tous ces composés étant, si nécessaire, substitués par un groupement G₁ susceptible de réagir avec un composé chimique donné ou un précurseur d'un tel groupement. En effet, il est clair que si, parmi les composés listés ci-dessus, certains composés ne présentent pas de groupement G₁ susceptible de réagir avec un composé chimique donné ou un précurseur d'un tel groupement, un tel groupement devra être introduit dans lesdits composés au moyen d'une substitution pour qu'ils deviennent utilisables dans le cadre de la présente invention.

L'homme du métier saura déterminer, sans aucun effort inventif, les conditions adéquates à utiliser, lors de l'étape de greffage du procédé (i.e. étape (c)), en fonction du type de précurseur mis en oeuvre et de la molécule M à obtenir. Ainsi, la transformation des fonctions amine en fonctions diazonium peut être réalisée en une seule étape à l'aide de NaNO₂ dans un milieu aqueux acide, ou à l'aide de NOBF₄ en milieu organique.

Dans une seconde variante notamment appliquée au cas où la molécule portant un groupement G₁ susceptible de réagir avec un composé chimique donné est un polymère ou un copolymère, le précurseur de celle-ci est :
- soit un monomère polymérisable par voie radicalaire et notamment les monomères de formule (II) tels que précédemment définis,
- soit un primaire d'adhésion qui amorce la réaction radicalaire permettant d'aboutir au polymère ou au copolymère, un tel primaire d'adhésion peut être une molécule M telle que précédemment définie, à l'exception que la molécule M ne doit pas obligatoirement porter un groupement G₁ susceptible de réagir avec un composé chimique donné ou un précurseur d'un tel groupement,
- soit un précurseur d'un tel primaire d'adhésion et, plus particulièrement, un précurseur d'une molécule M tel que précédemment défini, à l'exception que ledit précurseur ne doit pas obligatoirement porter un groupement G₁ susceptible de réagir avec un composé chimique donné ou un précurseur d'un tel groupement,
- soit un de leurs mélanges.

La quantité de molécules M, de précurseurs de molécules M, de primaires d'adhésion ou de précurseurs de primaires d'adhésion dans la solution S₂ peut varier en fonction du souhait de l'expérimentateur. Cette quantité est avantageusement comprise, au sein de la solution S₂, entre 10⁻⁶ et 5 M environ, de préférence entre 5.10⁻² et 10⁻¹ M.

La quantité de monomères polymérisables dans la solution S₂ peut varier en fonction du souhait de l'expérimentateur. Cette quantité peut être supérieure à la solubilité du monomère considéré dans le solvant de la solution S₂ employé et peut représenter par exemple de 18 à 40 fois la solubilité dudit monomère dans la solution S₂ à une température donnée, généralement la température ambiante ou celle de réaction. Dans ces conditions, il est avantageux d'employer des moyens permettant la dispersion des molécules de monomère dans la solution tels qu'un tensioactif ou des ultrasons. Les tensioactifs utilisables sont notamment les tensioactifs anioniques, les tensioactifs cationiques, les tensioactifs zwitterioniques, les tensioactifs amphotères et les tensioactifs neutres (non-ioniques) et, notamment, les tensioactifs décrits dans la demande internationale WO 2008/078052 [22].

Lors de l'étape (b) du procédé selon la présente invention, les nanotubes de carbone sont mis au contact d'au moins une molécule M telle que précédemment définie ou d'au moins un précurseur de celle-ci tel que précédemment défini. Cette mise en contact est une étape classique en chimie.

L'étape (c) du procédé selon la présente invention correspond à l'étape de greffage telle que précédemment définie.

Comme la molécule à greffer ou ses précurseurs sont présents en grande quantité dans la solution S₂, l'étape de greffage peut être stoppée avant que toutes les molécules ne soient fixées sur les nanotubes de carbone. L'homme du métier connaît différentes techniques permettant d'arrêter l'étape de greffage et saura déterminer la technique la mieux adaptée en fonction de la molécule à greffer ou de ses précurseurs mis en oeuvre à l'étape (c). A titre d'exemples de telles techniques, on peut citer un changement de pH de la solution S₂ notamment en y ajoutant une solution basique (par exemple, de l'eau basique à un pH supérieur à 10), une élimination des molécules à greffer ou de ses précurseurs présents dans la solution S₂ (par exemple, par filtration, par précipitation ou par complexation).

Dans le procédé de préparation selon la présente invention, l'étape (d) consiste, tout d'abord, à récupérer les nanotubes de carbone greffés suite à l'étape (c) avant de les placer dans la solution S1 et de les déposer sur les électrodes comme précédemment décrit. Toute technique permettant de récupérer des nanotubes de carbone est susceptible d'être mise en oeuvre dans le cadre de la présente invention.

A titre d'exemples, on peut citer la récupération des nanotubes par filtration de la solution mise en oeuvre à l'étape (c) notamment en utilisant des membranes de téflon ou des filtres papier en crêpe plissé. Il peut être nécessaire de répéter plusieurs fois cette étape de filtration.

De plus, avant de mettre en suspension les nanotubes de carbone greffés ainsi récupérés, on peut envisager de sécher ces nanotubes. Cette étape de séchage peut être mise en oeuvre dans un four ou dans une étuve et ce à une température comprise entre 80°C et 150°C et notamment comprise entre 100°C et 130°C.

D'autres caractéristiques et avantages de la présente invention apparaîtront encore à l'homme du métier à la lecture des exemples ci-dessous donnés à titre illustratif et non limitatif, en référence aux figures annexées.

### BRÈVE DESCRIPTION DES DESSINS

La figure 1 est une représentation schématique du principe d'un dispositif selon la présente invention.
La figure 2 présente la résistance initiale du capteur en fonction du nombre de gouttes (8 µL par goutte) déposées sur les électrodes avec et sans diélectrophorèse.
La figure 3 présente des images par microscopie optique de nanotubes de carbone multi-parois déposés sur les électrodes interdigitées par diélectrophorèse après le dépôt d'une goutte de suspension (figure 3A) et sans diélectrophorèse après le dépôt de seize gouttes de suspension (figure 3B).
La figure 4 présente des images par microscopie optique de nanotubes de carbone multi-parois déposés sur les électrodes interdigitées par diélectrophorèse après le dépôt d'une goutte de suspension (5 mg/L), les nanotubes de carbone étant soit bruts (figure 4A), soit recuits (figure 4B).
La figure 5 présente les courbes de détection du chlore à une teneur de 100 ppb (dilué dans l'azote) des capteurs basés sur des nanotubes « bruts » et « recuits ». La résistance normalisée, i.e. la résistance mesurée divisée par la résistance initiale, est reportée en ordonnée en fonction du temps exprimé en minutes.
La figure 6 présente la courbe de détection du chlore à une teneur de 27 ppb (dilué dans l'azote) à l'aide d'un capteur selon l'invention basé sur des nanotubes recuits. La résistance normalisée, i.e. la résistance mesurée divisée par la résistance initiale, est reportée en ordonnées en fonction du temps exprimé en minutes.
La figure 7 présente des images par microscopie électronique à transmission de nanotubes « bruts » (figure 7A où les flèches indiquent la présence de particules à base de fer dans le coeur des nanotubes), de nanotubes « bruts » fonctionnalisés (figure 7B), de nanotubes recuits (élimination du fer) (figure 7C) et de nanotubes recuits fonctionnalisés (figure 7D).
La figure 8 présente des images par microscopie optique de nanotubes de carbone multi-feuillets bruts et fonctionnalisés par des groupements -Ph-CH₂-NH₂ (figure 8A) ou de nanotubes de carbone multi-feuillets recuits et fonctionnalisés par des groupements -Ph-CH₂-NH₂ (figure 8B).
La figure 9 présente la comparaison des courbes de détection du chlore à une teneur de 100 ppb (dilué dans l'azote) entre les capteurs basés sur des nanotubes « bruts » et les capteurs basés selon l'invention sur des nanotubes fonctionnalisés.
La figure 10 présente la comparaison des courbes de détection du chlore à une teneur de 100 ppb (dilué dans l'azote) entre les capteurs basés sur des nanotubes recuits et les capteurs selon l'invention basés sur des nanotubes recuits et fonctionnalisés.
La figure 11 présente la comparaison des courbes de détection du chlore à une teneur de 100 ppb (dilué dans l'azote) entre les capteurs selon l'invention basés sur des nanotubes fonctionnalisés recuits ou non.

### EXPOSÉ DÉTAILLÉ DE MODES DE RÉALISATION PARTICULIERS

### Exemple 1 : Préparation des suspensions de nanotubes de carbone multi-feuillets longs.

Les suspensions à différentes concentrations (1∼100 mg/L) de nanotubes de carbone multi-feuillets longs (400 µm) dans l'isopropanol sont préparées à l'aide d'une sonde à ultrasons. Dans cet exemple, les suspensions sont soumises aux ultrasons pendant 8 minutes à hauteur de 250 W. Jusqu'à 10 mg/L, les suspensions sont stables (visuellement) pendant plusieurs heures.

Pour les suspensions plus concentrées, une floculation ou sédimentation des nanotubes apparaît après quelques dizaines de minutes. Les suspensions présentant une concentration en nanotubes de 5 à 10 mg/L sont utilisées pour la fabrication des capteurs basés sur l'utilisation de nanotubes non fonctionnalisés.

Les suspensions de nanotubes fonctionnalisés sont, quant à elles, stables dans l'isopropanol pendant quelques heures voire quelques jours à des concentrations inférieures à 100 mg/L. Les suspensions présentant une concentration de nanotubes dans une gamme de 20 à 100 mg/L sont utilisées pour la préparation de capteurs à base de nanotubes fonctionnalisés.

### Exemple 2 : Effet de la diélectrophorèse lors de la préparation des capteurs selon l'invention.

Les conditions de diélectrophorèse appliquées sont une tension sinusoïdale de 5 MHz et de 20 V crête à crête.

La résistance initiale d'un capteur en fonction du nombre de gouttes (8 µL par goutte) déposées sur les électrodes avec et sans diélectrophorèse a été étudiée (Figure 2). La concentration en nanotubes de la suspension utilisée pour les deux capteurs est de 5 mg/L.

Dans cet exemple, la diélectrophorèse permet de réduire d'un facteur 16 le nombre de gouttes déposées pour atteindre le bon niveau de résistance initial.

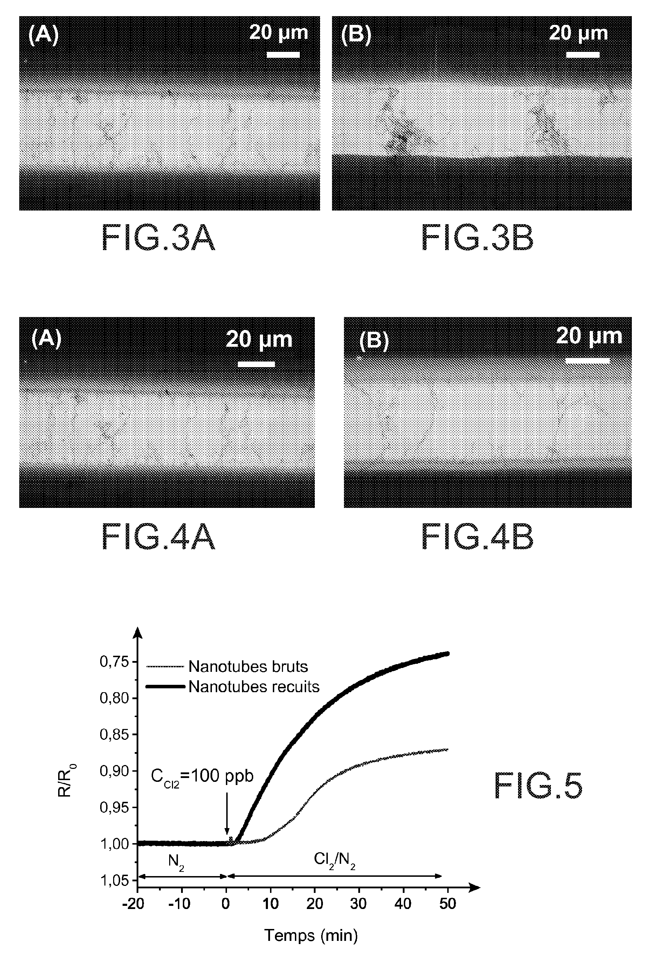

De plus, l'image par microscopie optique des nanotubes de carbone multi-parois déposés, sur les électrodes interdigitées, par diélectrophorèse, après le dépôt d'une goutte de suspension révèle que les nanotubes sont quasi-individuels et présentent une orientation préférentielle perpendiculaire aux électrodes (Figure 3A). Les nanotubes sont, au contraire, organisés en amas comme visualisé sur l'image par microscopie optique des nanotubes de carbone multi-parois déposés, sur les électrodes interdigitées, sans diélectrophorèse, après le dépôt de seize gouttes de la suspension (Figure 3B).

### Exemple 3 : Effet du recuit des nanotubes de carbone.

Cet exemple vise à comparer un dispositif à base de nanotubes de carbone « bruts » et un dispositif à base de nanotubes de carbone recuits à 2000°C pendant une heure sous argon.

Les Figures 4A et 4B sont les images par microscopie optique obtenues pour des nanotubes de carbone multi-parois respectivement « bruts » ou « recuits », déposés sur les électrodes interdigitées par diélectrophorèse après le dépôt d'une goutte de suspension (5 mg/L).

La sensibilité de tels capteurs basés sur des nanotubes « bruts » et « recuits » vis-à-vis du chlore dilué dans l'azote à une teneur de 100 ppb a également été comparée. Les résultats présentés Figure 5 montrent que la sensibilité (S=(R-R₀)/R₀)*100) à 50 min du capteur basé sur des nanotubes « recuits » est deux fois plus importante, comparée à celle du capteur basé sur des nanotubes « bruts » (26 contre 12,5).

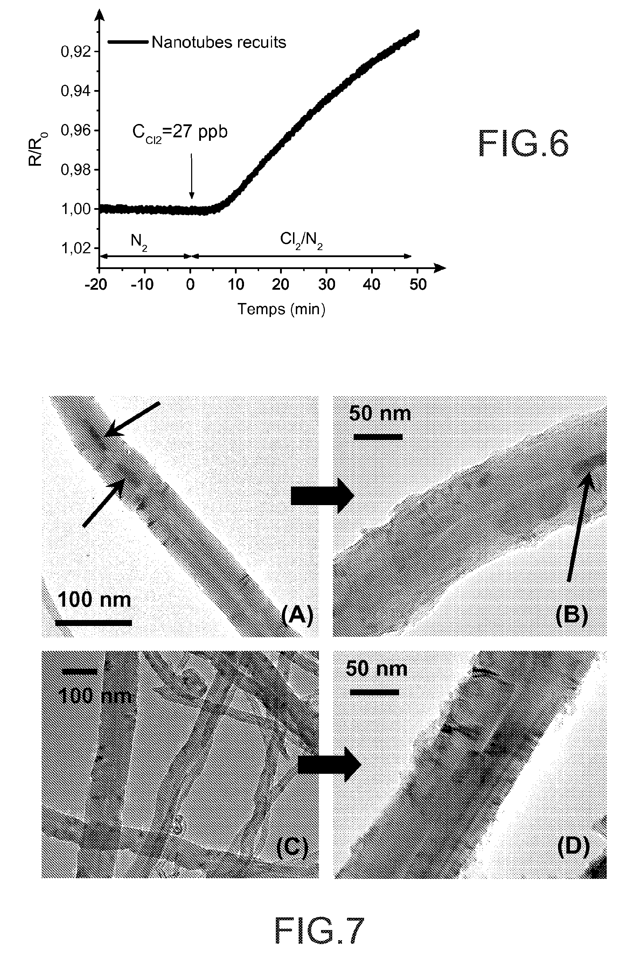

De plus, la sensibilité (S=(R-R₀)/R₀)*100) vis-à-vis du chlore dilué dans l'azote à une teneur de 27 ppb d'un capteur basé sur des nanotubes « recuits » et mesurée à 50 minutes est de 7% (Figure 6).

### Exemple 4 : Elaboration de capteurs basés sur des nanotubes de carbone multi-feuillets fonctionnalisés par des groupements -Ph-CH₂-NH₂.

La fonctionnalisation des nanotubes est réalisée en suivant le protocole décrit ci-après.

Quinze mg de nanotubes sont soumis à un traitement aux ultrasons pendant 8 min à 250 W dans 30 mL d'HCl à 0,5 M avec 3.10⁻³ mol de 4-aminobenzyl amine. A ce mélange, est ensuite ajouté 3.10⁻³ mol de nitrite de sodium dissout dans 30 mL d'eau distillée. Quatre g de poudre de fer sont ajoutés à l'ensemble qui est porté dans un bac à ultrasons.

Après 90 min de réaction, la poudre de fer est retirée à l'aide d'une baguette magnétique et le mélange est filtré puis lavé abondamment avec de l'éthanol, de l'acétone et de l'eau distillée. Les nanotubes sont ensuite séchés à l'étuve à 120°C. Les nanotubes fonctionnalisés sont soumis à un traitement aux ultrasons à nouveau dans l'isopropanol pendant 8 min à 250 W à hauteur de 20 à 100 mg/L. Les suspensions sont stables pendant plusieurs heures voire un jour.

Les nanotubes bruts ou « recuits », fonctionnalisés ou non, sont observés par microscopie électronique à transmission. Des particules à base de fer sont présentes dans le coeur des nanotubes « bruts » non fonctionnalisés (Figure 7A) et une fine couche de polymère (<10 nm) recouvre la surface des nanotubes « bruts » fonctionnalisés (Figure 7B). Le fer a été éliminé des nanotubes « recuits » (Figure 7C) et une fine couche de polymère (<20 nm) recouvre la surface des nanotubes « recuits » fonctionnalisés.

Les nanotubes multi-feuillets, fonctionnalisés (-Ph-CH₂-NH₂), bruts ou « recuits », sont déposés sur les électrodes interdigitées par diélectrophorèse à l'aide de trois gouttes (8 µL) d'une suspension respectivement à 20 mg/L et à 40 mg/L (Figures 8A et 8B).

La fonctionnalisation conduit à un gain en sensibilité de 120% (à 200 min) (S= (R-R₀) /R₀) *100), vis-à-vis du chlore dilué dans l'azote à une teneur de 100 ppb, dans des capteurs comparés aux capteurs basés sur des nanotubes bruts sans fonctionnalisation (Figure 9).

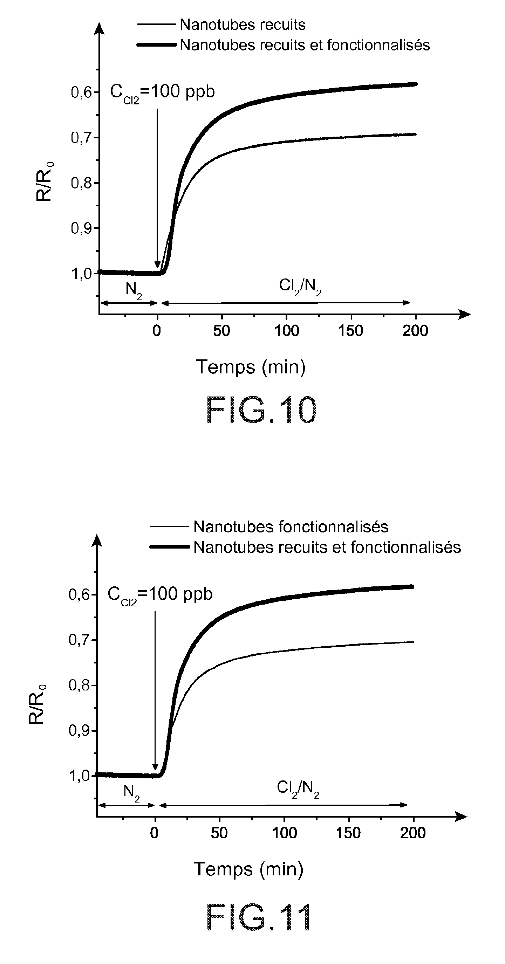

La fonctionnalisation conduit à un gain en sensibilité de 35% (à 200 min) (S= (R-R₀)/R₀)*100), vis-à-vis du chlore dilué dans l'azote à une teneur de 100 ppb, dans des capteurs basés sur des nanotubes « recuits » et fonctionnalisés comparés aux capteurs basés sur des nanotubes « recuits » sans fonctionnalisation (Figure 10).

Les capteurs à base de nanotubes « recuits » et fonctionnalisés présentent un gain en sensibilité (S=(R-R₀)/R₀)*100) de 40 % (à 200 min) vis-à-vis du chlore dilué dans l'azote à une teneur de 100 ppb, comparés aux capteurs basés sur des nanotubes fonctionnalisés mais non préalablement recuits (Figure 11).

### REFERENCES

[1] Niizeki et al. Journal of the electrochemical Society 145 (1998) 2445-2447 "Room temperature operating solid-state sensor for chlorine gas".
[2] Banet et al. Sensors and transducers 83 (2007) 1541 "Efficient probes for a fast detection of chlorine gas at ppb level".
[3] Bender et al. Sensors and actuators B 77 (2001) 281-286 "Characterization of a WO3 thin film chlorine sensor".
[4] Wei et al. Sensors and actuators B 101 (2004) 81-89 "A novel SnO2 gas sensor doped with carbon nanotubes operating at room temperature".
[5] Bittencourt et al. Sensors and actuators B 115 (2005) 33 "WO3 films modified with functionalised multi-wall carbon nanotubes: Morphological, compositional and gas response studies".
[6] Demande de brevet US 2007/0145356 (Amlani et al.) publiée le 28 juin 2007.
[7] Kong et al. Science 287 (2000) 622 "Nanotube Molecular Wires as Chemical Sensors".
[8] Qi et al. Nanoletters 3 (2003) 347 "Toward Large Arrays of Multiplex Functionalized Carbon Nanotube Sensors for Highly Sensitive and Selective Molecular Detection".
[9] Jang et al. Sensors and actuators B 99 (2004) 118 "A simple approach in fabricating chemical sensor using laterally grown multi-walled carbon nanotubes".
[10] Valentini et al. Appl. Phys. Lett. 82 (2003) 961 "Sensors for sub-ppm NO2 gas detection based on carbon nanotube thin films".
[11] Roy et al. Vacuum 77 (2005) 223 "Room temperature sensor based on carbon nanotubes and nanofibres for methane detection".
[12] Li et al. IEEE Sensors Journal 6 (2006) 1047-1049 "Nano-Chemical Sensors With Polymer-Coated Carbon Nanotubes".
[13] Wang et al. Diam. Relat. Mater. 13 (2004) 1327 "Multi-walled carbon nanotube-based gas sensors for NH3 detection".
[14] Suehiro et al. Appl. Phys D: Appl. Phys 36 (2003) 109 "Fabrication of a carbon nanotube-based gas sensor using dielectrophoresis and its application for ammonia detection by impedance spectroscopy".
[15] Demande internationale WO 2005/026694 (NANOMIX, INC.) publiée le 24 mars 2005.
[16] Demande internationale WO 2005/062031 (NANOMIX, INC.) publiée le 7 juillet 2005.
[17] Demande de brevet US 2006/0263255 (Amlani et al.) publiée le 23 novembre 2006.
[18] Brevet US 7,312,095 (NANOMIX, INC.) publié le 25 décembre 2007.
[19] Demande internationale WO 2004/000727 (CEA) publiée le 31 décembre 2003.
[20] Demande internationale WO 2005/033378 (CEA) publiée le 14 avril 2005.
[21] Demande internationale WO 2006/097611 (CEA) publiée le 21 septembre 2006.
[22] Demande internationale WO 2008/078052 (CEA) publiée le 3 juillet 2008.

## Revendications

1. Dispositif destiné à détecter au moins un composé chimique, **caractérisé en ce que** ledit dispositif comprend au moins un nanotube de carbone à plusieurs couches de graphène, sur lequel est greffée au moins une molécule portant un groupement G₁ susceptible de réagir avec ledit composé chimique ou un précurseur d'un tel groupement G₁,
**caractérisé en ce que** ledit nanotube de carbone est un nanotube recuit.

2. Dispositif selon la revendication 1, **caractérisé en ce que** ledit nanotube de carbone présente une longueur comprise entre 1 *µ*m et 1 mm.

3. Dispositif selon la revendication 1 ou 2, **caractérisé en ce que** ladite molécule à greffer est un sel d'aryle clivable choisi dans le groupe constitué par les sels d'aryle diazonium, les sels d'aryle ammonium, les sels d'aryle phosphonium et les sels d'aryle sulfonium, ledit groupe aryle portant un groupement G₁ susceptible de réagir avec ledit composé chimique ou un précurseur d'un tel groupement.

4. Dispositif selon l'une quelconque des revendications précédentes, **caractérisé en ce que** ladite molécule à greffer est un sel d'aryle clivable de formule (I) suivante :
R-N₂⁺, A⁻ (I)
dans laquelle :
- A représente un anion monovalent et
- R représente un groupe aryle R portant un groupement G₁ susceptible de réagir avec ledit composé chimique ou un précurseur d'un tel groupement.

5. Dispositif selon la revendication 3 ou 4, **caractérisé en ce que** ledit groupe aryle est choisi parmi les structures carbonées aromatiques ou hétéroaromatiques, éventuellement mono- ou polysubstituées, constituées d'un ou plusieurs cycles aromatiques ou hétéroaromatiques comportant chacun de 3 à 8 atomes, le ou les hétéroatomes pouvant être N, O, P ou S, le ou les substituants contenant éventuellement un ou plusieurs hétéroatomes ou des groupes alkyles en C₁ à C₆.

6. Dispositif selon la revendication 4 ou 5, **caractérisé en ce que** A est choisi parmi les halogénures, les halogénoborates, les perchlorates, les sulfonates, les alcoolates et les carboxylates.

7. Dispositif selon la revendication 1 ou 2, **caractérisé en ce que** ladite molécule greffée sur ledit nanotube de carbone est un polymère ou un copolymère principalement issu de plusieurs unités monomères identiques et/ou différentes, ledit polymère ou copolymère portant au moins un groupement G₁ susceptible de réagir avec ledit composé chimique ou un précurseur d'un tel groupement.

8. Dispositif selon la revendication 7, **caractérisé en ce que** les unités monomères sont des monomères polymérisables par voie radicalaire et, de préférence, des molécules de type éthylénique.

9. Dispositif selon la revendication 8, **caractérisé en ce que** lesdits monomères sont choisis parmi les monomères de formule (II) suivante : 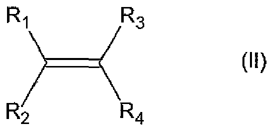 dans laquelle les groupes R₁ à R₄, identiques ou différents, représentent un atome monovalent non métallique tel qu'un atome d'halogène, un atome d'hydrogène, un groupe chimique saturé ou insaturé, tel qu'un groupe alkyle, aryle, un nitrile, un carbonyle, une amine, un amide ou un groupe-COOR₅ dans lequel R₅ représente une atome d'hydrogène ou un groupe alkyle en C₁-C₁₂ et de préférence en C₁-C₆.

10. Dispositif selon l'une quelconque des revendications précédentes, **caractérisé en ce que** ledit groupement G₁ susceptible de réagir avec ledit composé chimique est choisi dans le groupe constitué par les fonctions hydroxyle, thiol, azide, époxyde, azyridine, amine, nitrile, isocyanate, thiocyanate, nitro, amide, halogénure notamment halogénure d'alkyle, acide carboxylique et ester.

11. Dispositif selon l'une quelconque des revendications précédentes, **caractérisé en ce qu'**il comprend en outre
- un support,
- et deux électrodes disposées sur ledit support,
ledit nanotube de carbone assurant un contact électrique entre lesdites deux électrodes.

12. Dispositif selon la revendication 11, **caractérisé en ce que** lesdites électrodes présentent une configuration en peigne interdigité.

13. Dispositif selon l'une quelconque des revendications précédentes, **caractérisé en ce que** ledit nanotube présente une orientation sensiblement perpendiculaire vis-à-vis desdites deux électrodes.

14. Système comprenant au moins deux dispositifs selon l'une quelconque des revendications précédentes.

15. Utilisation d'un dispositif selon l'une quelconque des revendications 1 à 13 ou d'un système selon la revendication 14 pour détecter et éventuellement quantifier un ou plusieurs composé(s) chimique(s) gazeux.

16. Utilisation selon la revendication 15, **caractérisée en ce que** ledit composé chimique gazeux est choisi dans le groupe constitué par les composés organiques volatils, l'hydrogène, le monoxyde de carbone, le dioxyde de carbone, le chlore et les composés chlorés, l'ammoniac, les gaz organo-phosphorés, l'acide cyanhydrique, le chlorure de thionyle, la phosphine, le tétrahydrofurane, le méthane et le diméthyl méthylphosphonate.

17. Procédé de préparation d'un dispositif destiné à détecter au moins un composé chimique selon l'une quelconque des revendications 1 à 13, **caractérisé en ce que** ledit procédé comprend une étape consistant à déposer, sur deux électrodes, au moins un nanotube de carbone à plusieurs couches de graphène recuit, sur lequel est greffée au moins une molécule portant un groupement G₁ susceptible de réagir avec ledit composé chimique ou un précurseur d'un tel groupement G₁, de façon à ce que ledit nanotube de carbone assure un contact électrique entre lesdites électrodes.

18. Procédé selon la revendication 17, **caractérisé en ce que** ledit dépôt est effectué par diélectrophorèse.

19. Procédé selon la revendication 17 ou 18, **caractérisé en ce que** ledit procédé comprend une étape préalable consistant à greffer sur ledit nanotube de carbone ladite molécule portant un groupement G₁ susceptible de réagir avec ledit composé chimique ou un précurseur d'un tel groupement.

20. Procédé selon l'une quelconque des revendications 17 à 19, **caractérisé en ce que** ledit procédé comprend les étapes successives suivantes :
a) recuire le nanotube de carbone à plusieurs couches de graphène,
b) mettre le nanotube éventuellement recuit à l'étape (a) au contact d'une solution S₂ contenant au moins une molécule portant un groupement G₁ susceptible de réagir avec ledit composé chimique ou un précurseur d'un tel groupement ou au moins un précurseur de celle-ci ;
c) soumettre le mélange de l'étape (b) à des conditions non-électrochimiques de façon à greffer, sur ledit nanotube, ladite molécule ou ledit précurseur ;
d) récupérer le nanotube greffé obtenu après l'étape (c) et le déposer sur deux électrodes, notamment, par diélectrophorèse.

## Patentansprüche

1. Vorrichtung zur Erfassung wenigstens einer chemischen Verbindung, **dadurch gekennzeichnet, dass** die Vorrichtung wenigstens ein Kohlenstoff-Nanoröhrchen mit mehreren Graphenschichten umfasst, auf das wenigstens ein Molekül gepfropft ist, welches eine Gruppe G₁ trägt, die dazu ausgelegt ist, mit der chemischen Verbindung zu reagieren, oder einen Präkursor einer solchen Gruppe G₁,
**dadurch gekennzeichnet, dass** das Kohlenstoff-Nanoröhrchen ein geglühtes Nanoröhrchen ist.

2. Vorrichtung nach Anspruch 1, **dadurch gekennzeichnet, dass** das Kohlenstoff-Nanoröhrchen eine Länge aufweist, die zwischen 1 *µ*m und 1 mm enthalten ist.

3. Vorrichtung nach Anspruch 1 oder 2, **dadurch gekennzeichnet, dass** das zu pfropfende Molekül ein spaltbares Arylsalz ist, ausgewählt aus der Gruppe gebildet durch die Aryldiazoniumsalze, die Arylamoniumsalze, die Arylphosphoniumsalze und die Arylsulphoniumsalze, wobei die Arylgruppe eine Gruppe G₁ trägt, die dazu ausgelegt ist, mit der chemischen Verbindung zu reagieren, oder einen Präkursor einer solchen Gruppe.

4. Vorrichtung nach einem der vorhergehenden Ansprüche, **dadurch gekennzeichnet, dass** das zu pfropfende Molekül ein spaltbares Arylsalz der nachfolgenden Formel (I) ist:
R-N₂⁺, A⁻ (I)
wobei:
- A ein monovalentes Anion darstellt, und
- R eine Arylgruppe R darstellt, die eine Gruppe G₁ trägt, welche dazu ausgelegt ist, mit der chemischen Verbindung zu reagieren, oder einen Präkursor einer solchen Gruppe.

5. Vorrichtung nach Anspruch 3 oder 4, **dadurch gekennzeichnet, dass** die Arylgruppe ausgewählt ist aus den aromatischen oder heteroaromatischen, gegebenenfalls einfach oder mehrfach substituierten Kohlenstoffstrukturen, gebildet durch einen oder mehrere aromatische oder heteroaromatische Ringe, die jeweils von 3 bis 8 Atomen umfassen, wobei das oder die Heteroatome N, O, P oder S sein können, wobei der oder die Substituenten gegebenenfalls ein oder mehrere Heteroatome oder C₁- bis C₆-Alkylgruppen enthalten können.

6. Vorrichtung nach Anspruch 4 oder 5, **dadurch gekennzeichnet, dass** A ausgewählt ist aus den Halogeniden, den Halogenboraten, den Perchloraten, den Sulfonaten, den Alkoholaten und den Carboxylaten.

7. Vorrichtung nach Anspruch 1 oder 2, **dadurch gekennzeichnet, dass** das auf das Kohlenstoff-Nanoröhrchen gepfropfte Molekül ein Polymer oder ein Copolymer ist, das hauptsächlich aus mehreren identischen und/oder unterschiedlichen Monomereinheiten hervorgegangen ist, wobei das Polymer oder Copolymer wenigstens eine Gruppe G₁ trägt, die dazu ausgelegt ist, mit der chemischen Verbindung zu reagieren, oder einen Präkursor einer solchen Gruppe.

8. Vorrichtung nach Anspruch 7, **dadurch gekennzeichnet, dass** die Monomereinheiten radikalisch polymerisierbare Monomere und vorzugsweise Moleküle vom ethylenischen Typ sind.

9. Vorrichtung nach Anspruch 8, **dadurch gekennzeichnet, dass** die Monomere ausgewählt sind aus den Monomeren der nachfolgenden Formel (II): 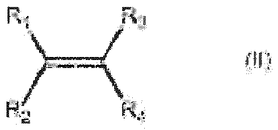 wobei die Gruppen R₁ bis R₄, die identisch oder unterschiedlich sind, ein monovalentes nichtmetallisches Atom darstellen, wie zum Beispiel ein Halogenatom, ein Wasserstoffatom, eine gesättigte oder ungesättigte chemische Gruppe wie zum Beispiel eine Alkyl-, Aryl-, Nitril-, Carbonyl-, Amin- oder Amid-Gruppe, oder eine Gruppe-COOR₅, wobei R₅ ein Wasserstoffatom oder eine Alkylgruppe aus C₁-C₁₂ und vorzugsweise aus C₁-C₆ darstellt.

10. Vorrichtung nach einem der vorhergehenden Ansprüche, **dadurch gekennzeichnet, dass** die Gruppe G₁, die dazu ausgelegt ist, mit der chemischen Verbindung zu reagieren, ausgewählt ist aus der Gruppe gebildet durch die Hydroxyl-, Thyol-; Azid-, Epoxid-, Aziridin-, Amin-, Nitril-, Isocyanat-, Thiocyanat-, Nitro-, Amid-, Halogenid-, insbesondere Alkylhalogenid-, Carboxylsäure- und Ester-Funktionen.

11. Vorrichtung nach einem der vorhergehenden Ansprüche, **dadurch gekennzeichnet, dass** sie ferner umfasst:
- einen Träger
- und zwei auf dem Träger angeordnete Elektroden,
wobei das Kohlenstoff-Nanoröhrchen einen elektrischen Kontakt zwischen den zwei Elektroden gewährleistet.

12. Vorrichtung nach Anspruch 11, **dadurch gekennzeichnet, dass** die Elektroden eine Konfiguration eines Interdigitalkamms aufweisen.

13. Vorrichtung nach einem der vorhergehenden Ansprüche, **dadurch gekennzeichnet, dass** das Nanoröhrchen eine Orientierung im Wesentlichen orthogonal zu den zwei Elektroden aufweist.

14. System, umfassend wenigstens zwei Vorrichtungen nach einem der vorhergehenden Ansprüche.

15. Verwendung einer Vorrichtung nach einem der Ansprüche 1 bis 13 oder eines Systems nach Anspruch 14 zur Erfassung und gegebenenfalls Quantifizierung einer oder mehrerer gasförmiger chemischer Verbindung(en).

16. Verwendung nach Anspruch 15, **dadurch gekennzeichnet, dass** die gasförmige chemische Verbindung ausgewählt ist aus der Gruppe gebildet durch die flüchtigen organischen Verbindungen, Wasserstoff, Kohlenmonoxid, Kohlendioxid, Chlor und den Chlorverbindungen, Ammoniak, Organophosphorgasen, Blausäure, Thionylchlorid, Phosphin, Tetrahydrofuran, Methan und Dimethylmethylphosphonat.

17. Verfahren zur Herstellung einer Vorrichtung zur Erfassung wenigstens einer chemischen Verbindung nach einem der Ansprüche 1 bis 13, **dadurch gekennzeichnet, dass** das Verfahren einen Schritt umfasst, der darin besteht, auf zwei Elektroden wenigstens ein geglühtes Kohlenstoff-Nanoröhrchen mit mehreren Schichten aus Graphen aufzubringen, auf das wenigstens ein Molekül gepfropft ist, welches eine Gruppe G₁ trägt, die dazu ausgelegt ist, mit der chemischen Verbindung zu reagieren, oder einen Präkursor einer solchen Gruppe G₁, derart, dass das Kohlenstoff-Nanoröhrchen einen elektrischen Kontakt zwischen den Elektroden gewährleistet.

18. Verfahren nach Anspruch 17, **dadurch gekennzeichnet, dass** die Aufbringung durch Dielektrophorese ausgeführt wird.

19. Verfahren nach Anspruch 17 oder 18, **dadurch gekennzeichnet, dass** das Verfahren einen vorgeschalteten Schritt umfasst, der darin besteht, auf das Kohlenstoff-Nanoröhrchen das Molekül zu pfropfen, welches eine Gruppe G₁ trägt, welche dazu ausgelegt ist, mit der chemischen Verbindung zu reagieren, oder einen Präkursor einer solchen Gruppe.

20. Verfahren nach einem der Ansprüche 17 bis 19, **dadurch gekennzeichnet, dass** das Verfahren die folgenden aufeinanderfolgenden Schritte umfasst:
a) Glühen des Kohlenstoff-Nanoröhrchens mit mehreren Graphenschichten,
b) Inkontaktbringen des im Schritt (a) gegebenenfalls geglühten Nanoröhrchens mit einer Lösung L₂, die wenigstens ein Molekül enthält, das eine Gruppe G₁ trägt, welche dazu ausgelegt ist, mit der chemischen Verbindung zu reagieren, oder einen Präkursor einer solchen Gruppe, oder wenigstens einen Präkursor davon;
c) Aussetzen der Mischung des Schritts (b) an nicht-elektrochemische Bedingungen derart, dass das Molekül oder der Präkursor auf das Nanoröhrchen gepfropft wird;
d) Einsammeln des nach dem Schritt (c) erhaltenen gepfropften Nanoröhrchens und Aufbringen desselben auf zwei Elektroden, insbesondere mittels Dielektrophorese.

## Claims

1. Device for detecting at least one chemical compound, **characterized in that** said device comprises at least one carbon nanotube with several graphene layers, on which is grafted at least one molecule bearing a group G₁ capable of reacting with said chemical compound or a precursor of such a group G₁,
**characterized in that** said carbon nanotube is an annealed nanotube.

2. Device according to claim 1, **characterized in that** said carbon nanotube has a length comprised between 1 *µ*m and 1 mm.

3. Device according to claim 1 or 2, **characterized in that** said molecule to be grafted is a cleavable aryl salt selected from the group consisting of aryl diazonium salts, aryl ammonium salts, aryl phosphonium salts and aryl sulfonium salts, said aryl group bearing a group G₁ capable of reacting with said chemical compound or a precursor of such a group.

4. Device according to any of the preceding claims, **characterized in that** said molecule to be grafted is a cleavable aryl salt of the following formula (I):
R-N₂⁺, A⁻ (I)
wherein:
- A represents a monovalent anion and
- R represents an aryl group R bearing a group G₁ capable of reacting with said chemical compound or a precursor of such a group.

5. Device according to claim 3 or 4, **characterized in that** said aryl group is selected from aromatic or heteroaromatic carbon structures, optionally mono- or poly-substituted, consisting of one or more aromatic or heteroaromatic rings each including 3 to 8 atoms, the heteroatom(s) may be N, O, P or S, the substituent(s) optionally containing one or more heteroatoms or C₁-C₆ alkyl groups.

6. Device according to claim 4 or 5, **characterized in that** A is selected from halides, haloborates, perchlorates, sulfonates, alcohoholates and carboxylates.

7. Device according to claim 1 or 2, **characterized in that** said molecule grafted on said carbon nanotube is a polymer or copolymer mainly derived from several identical and/or different monomer units, said polymer or copolymer bearing at least one group G₁ capable of reacting with said chemical compound or a precursor of such a group.

8. Device according to claim 7, **characterized in that** the monomer units are monomers which are polymerizable via a radical route and, preferably, molecules of the ethylene type.

9. Device according to claim 8, **characterized in that** said monomers are selected from monomers of the following formula (II): 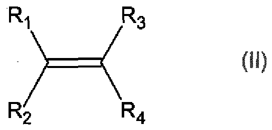 wherein the groups R₁ to R₄, either identical or different, represent a non-metal monovalent atom such as a halogen atom, a hydrogen atom, a saturated or unsaturated chemical group such as an alkyl, aryl group, a nitrile, a carbonyl, an amine, an amide or a -COO₅ group wherein R₅ represents a hydrogen atom or a C₁-C₁₂ and preferably C₁-C₆ alkyl group.

10. Device according to any of the preceding claims, **characterized in that** said group G₁ capable of reacting with said chemical compound is selected from the group consisting of hydroxyl, thiol, azide, epoxide, azyridine, amine, nitrile, isocyanate, thiocyanate, nitro, amide, halide notably alkyl halide, carboxylic acid and ester functions.

11. Device according to any of the preceding claims, **characterized in that** it further comprises
- a support,
- and two electrodes positioned on said support,
said carbon nanotube ensuring electric contact between said two electrodes.

12. Device according to claim 11, **characterized in that** said electrodes have an interdigitated comb configuration.

13. Device according to any of the preceding claims, **characterized in that** said nanotube has an orientation substantially perpendicular with respect to said two electrodes.

14. System comprising at least two devices according to any of the preceding claims.

15. Use of a device according to any of claims 1 to 13 or of a system according to claim 14 for detecting and optionally quantifying one or more gaseous chemical compounds.

16. Use according to claim 15, **characterized in that** said gaseous chemical compound is selected from the group consisting of volatile organic compounds, hydrogen, carbon monoxide, carbon dioxide, chlorine and chlorinated compounds, ammonia, organo-phosphorus gases, hydrocyanic acid, thionyl chloride, phosphene, tetrahydrofurane, methane and dimethyl methyphosphonate.

17. Method for preparing a device intended to detect at least one chemical compound according to any of claims 1 to 13, **characterized in that** said method comprises a step consisting of depositing on two electrodes, at least one annealed carbon nanotube with several graphene layers, on which is grafted at least one molecule bearing a group G₁ capable of reacting with said chemical compound or a precursor of such a group G₁, so that said carbon nanotube ensures electric contact between said electrodes.

18. Method according to claim 17, **characterized in that** said deposition is carried out by dielectrophoresis.

19. Method according to claim 17 or 18, **characterized in that** said method comprises a preliminary step consisting of grafting on said carbon nanotube said molecule bearing a group G₁ capable of reacting with said chemical compound or a precursor of such a group.

20. Method according to any of claims 17 to 19, **characterized in that** said method comprises the following successive steps:
a) annealing the carbon nanotube with several graphene layers,
b) putting the nanotube annealed in step (a) in contact with a solution S₂ containing at least one molecule bearing a group G₁ capable of reacting with said chemical compound or a precursor of such a group or at least one precursor of the latter;
c) submitting the mixture of step (b) to non-electrochemical conditions so as to graft on said nanotube, said molecule or said precursor;
d) recovering the grafted nanotube obtained after step (c) and depositing it on two electrodes, notably by dielectrophoresis.
